# EUROPEAN PATENT APPLICATION

(11) **EP 2 237 554 A1**
(43) Date of publication of application: **06.10.2010**
(21) Application number: 08776916.2
(22) Date of filing: 28.05.2008
(51) Int. Cl.: H04N 5/445, H04N 5/44, H04N 7/173

(54) **AV DEVICE AND UI DISPLAY METHOD**

(30) Priority: 28.12.2007 JP 2007338847; 18.04.2008 JP 2008109555
(71) Applicant: Sharp Kabushiki Kaisha, Osaka-shi, Osaka 545-8522 (JP)
(72) Inventor: UEMICHI, Akio, Osaka-shi, Osaka 545-8522 (JP); NAKAMURA, Hiroyuki, Osaka-shi, Osaka 545-8522 (JP); SAKAMOTO, Kenji, Osaka-shi, Osaka 545-8522 (JP); SASAKI, Jun, Osaka-shi, Osaka 545-8522 (JP); MATSUYAMA, Satoshi, Osaka-shi, Osaka 545-8522 (JP); WATANABE, Ryusuke, Osaka-shi, Osaka 545-8522 (JP)
(74) Representative: Müller - Hoffmann & Partner
(86) International application number: PCT/JP2008/059801
(87) International publication number: WO 2009/084252

(57) **Abstract**

To solve the problems that it is necessary to perform an overlapped operation even if final viewing is to be decided while a plurality of contents included in a specified list of UI are compared (selected for a plurality of times) and that extra operation burden is given to a user in conventional technology. An AV device for giving priority to the list of a viewing source device to which the content outputted at present belongs and displaying it in UI at the time of receiving a list request of the content from the user is provided.

## Description

### Field of the Invention

The present invention relates to an AV apparatus, which can select content in a plurality of devices as source for viewing by utilizing a unified UI (User Interface).

### Background Art

Recently, distribution of contents such as movie contents or music contents is done in various ways. Therefore, an AV apparatus, which enables viewing of a large amount of contents, is generally equipped with a user-friendly UI such that the user can search and select content in a short time. For example, in Japanese Unexamined Patent Application Publication No. 2005-198039, a UI, in which a list is reduced and displayed as a shrink pack with respect to each group, and only the selected group is developed and displayed, is disclosed. Moreover, in Japanese Unexamined Patent Application Publication No. 2006-31115, a UI, where symbol images corresponding to a plurality of selection target items are arranged and displayed in one direction in a display screen, and the arrangement is scrolled such that desired items are arranged in a place for detailed display, thereby carrying out selection, is disclosed.
Patent Reference 1: Japanese Unexamined Patent Application Publication No. 2005-198039
Patent Reference 2: Japanese Unexamined Patent Application Publication No. 2006-31115

### Disclosure of the Invention

### Problems that the Invention Tries to Solve

However, when displaying the UI again after selecting the content through the UI, the UI is back to an initial state. Therefore, when the user wishes to finally select the content comparing a plurality of contents included in a specific list (selecting more than once), the user is required to select a specific list from a plurality of lists of devices as source for viewing more than once, thereby causing operation load on the user.

### Means for Solving the Problems

In order to solve the above deficiencies, an AV apparatus of the present invention is provided. The AV apparatus can carry out display such that the list of the device as source for viewing including the content outputted by the output unit is preferentially displayed when a content list request from a user is received.

Specifically, the following aspects of the invention are provided.

In a first aspect of the invention, we provide an AV apparatus, comprising a connection unit, connectable with a plurality of devices as source for viewing, a reception unit for list request, receiving a content list request from a user, an acquisition unit for list, acquiring the list from the device as source for viewing, that is currently connected, a UI display unit, displaying such that at least a part of the lists of the devices as source for viewing is selectable by utilizing UI shared by all devices as source for viewing, a signal processing unit, processing content signal acquired from the device as source for viewing connected with the connection unit, an output unit, outputting the content processed by the signal processing unit and the UI, and a controller for UI display, controlling such that the list of the device as source for viewing including the content outputted by the output unit is preferentially displayed.

In a second aspect of the invention, we provide the AV apparatus based on the first aspect, wherein the controller for UI display comprises means for controlling to maintain, maintaining the display of the UI without deleting the UI even if the selection of the content is done through the UI display unit.

In a third aspect of the invention, we provide the AV apparatus based on the first or second aspect, wherein the controller for UI display comprises means for displaying 'in-viewing' indication, displaying an 'in-viewing' indication, an indication indicating the content selected through the UI display unit, on the list of the content corresponding to the UI.

In a fourth aspect of the invention, we provide the AV apparatus based on any one of the first to third aspects, wherein the controller for UI display comprises means for inputting to vary size, receiving an input to vary size of the UI to be displayed, and means for controlling size, controlling a proportion of the UI and the content in a screen, which are outputted from the output unit, according to variation by the means for inputting variation of size.

In a fifth aspect of the invention, we provide the AV apparatus based on any one of the first to fourth aspects, wherein the controller for UI display comprises means for transparently displaying, making the UI to be displayed transparent, and superimposingly displaying the UI on a area in the screen indicated by the content outputted from the output unit.

In a sixth aspect of the invention, we provide a method for displaying UI comprising the steps of connecting a plurality of devices as source for viewing, receiving a content list request from a user, acquiring the list from the device as source for viewing, the device is currently connected, displaying such that at least a part of the lists of the devices as source for viewing is selectable by utilizing UI shared by all devices as source for viewing, processing content signal acquired from the connected device as source for viewing, outputting the content processed by the step of processing and the UI, and controlling such that the list of the device as source for viewing including the outputted content is preferentially displayed.

### Effects of the Invention

According to the AV apparatus of the present invention, when the content list request from the user is received, the list of the device as source for viewing including the content outputted by the output unit is preferentially displayed, thereby reducing operation load on the user upon selecting the content.

### DETAILED DESCRIPTION OF THE INVENTION

Hereinbelow, embodiments of the present invention will be described. Relations between the embodiments and claims are as follows. The first embodiment will mainly describe Claims 1 and 6. The second embodiment will mainly describe Claim 2. The third embodiment will mainly describe Claim 3. The fourth embodiment will mainly describe Claim 4. The fifth embodiment will mainly describe Claim 5.The present invention is not to be limited to the above embodiments and able to be embodied in various forms without departing from the scope thereof.

### <<First Embodiment>>

### <Concept of First Embodiment>

An AV apparatus of a first embodiment has a function of preferentially displaying the content list of the device as source for viewing, which includes the content currently outputted, from more than or equal to one devices as source for viewing, which is currently connected with the AV apparatus and can provide content, when receiving the content list request from the user through a common UI.

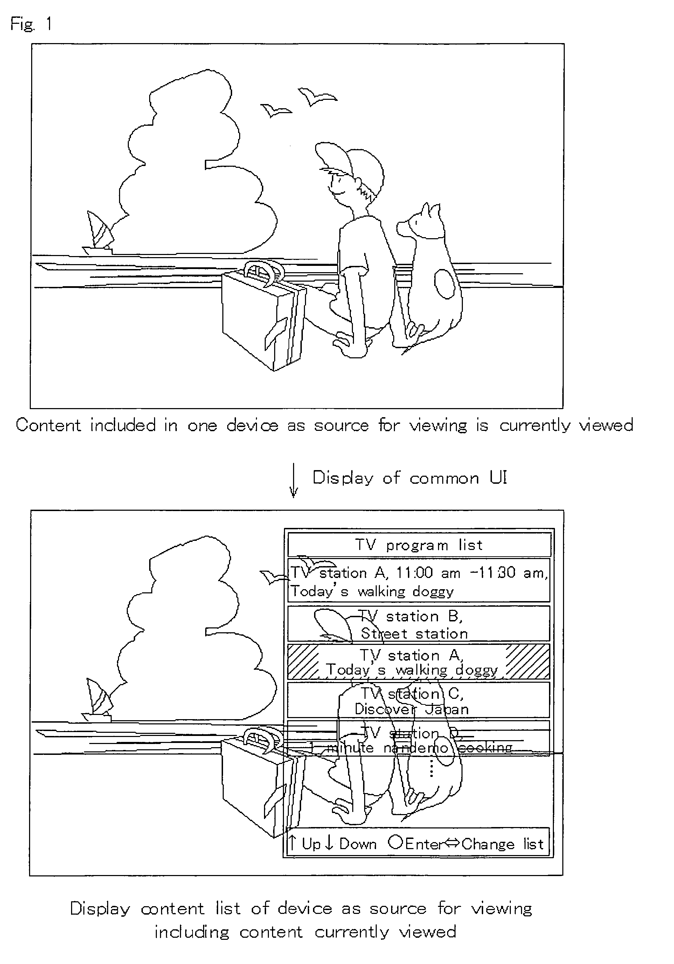

Fig. 1 is a schematic diagram showing the AV apparatus of the first embodiment. For example, when the user is viewing the content included in a device as source for viewing, if the user operates the AV apparatus to display the UI, the content list of the device as source for viewing is selected from a plurality of lists, and is displayed on the common UI. Therefore, the user can quickly access to the content list of the device as source for viewing including the content currently being viewed. Moreover, it is possible to avoid confusion caused on the user when the content currently being viewed and the displayed content list are included in different devices as source for viewing.

### <Configuration of First Embodiment>

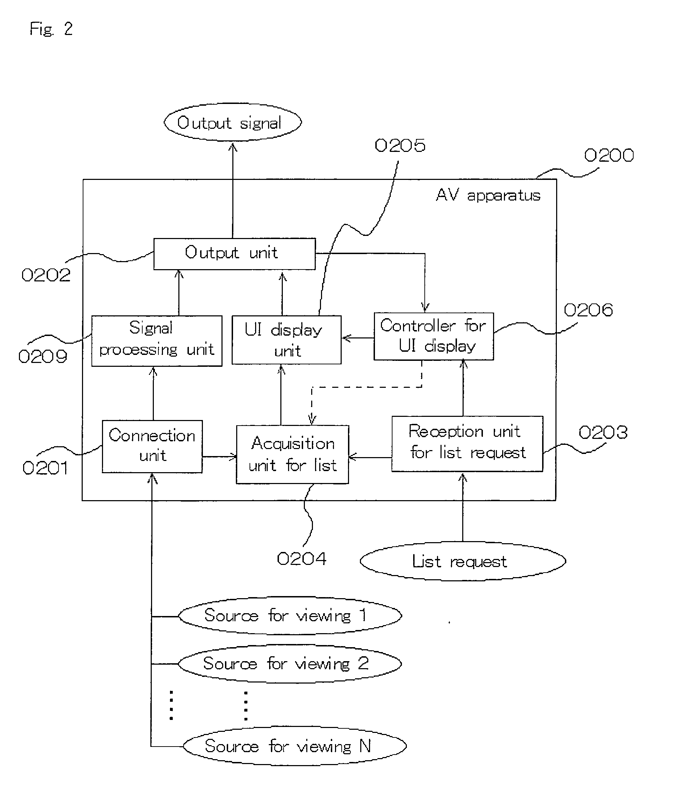

Fig. 2 is a functional block diagram of the transmitter for instruction concerning graphic of the first embodiment. The respective units of the present invention can be configured by hardware, software, or both hardware and software. For example, in the case of using a computer, the respective units are implemented by the hardware configured by a CPU, a memory, a bus, an interface, and other peripheral devices etc., and by the software operable on the hardware. Concretely speaking, by sequentially carrying out programs in the memory, the data in the memory and the data inputted via the interface are processed, stored, and outputted etc, thereby implementing functions of the respective units.

In Fig. 2, an 'AV apparatus' (0200) of the first embodiment comprises a 'connection unit' (0201), an 'output unit' (0202), a 'receiving unit for list request' (0203), an 'acquirer for list' (0204), a 'UI display unit' (0205), a 'controller for UI display' (0206), and a 'signal processing unit' (0209).

Moreover, the present invention can be implemented not only as an apparatus but also as a method (the same applies throughout the entire specification).

The connection unit (0201) is configured to be connectable with a plurality of devices as source for viewing.

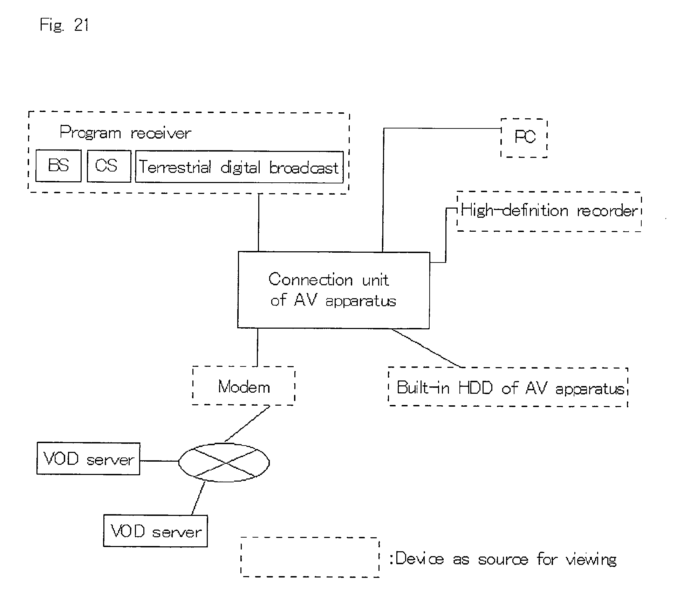

Here, the 'device as source for viewing' is a device, which is connected with the connection unit of the AV apparatus of the present invention, and can carry out transmission/reception of electronic data such as content with the AV apparatus. As shown in Fig. 21, examples of the device include a device for receiving programs (e.g., programs broadcasted through digital terrestrial broadcasting, BS digital broadcasting, CS broadcasting), various electronic devices such as a personal computer having a storage medium such as a hard disk or a high-definition recorder, a modem capable of acquiring information from a content distribution server as a server for VOD (video-on-demand), and a built-in HDD of the AV apparatus. Each of the above devices configures the device as source for viewing, respectively.

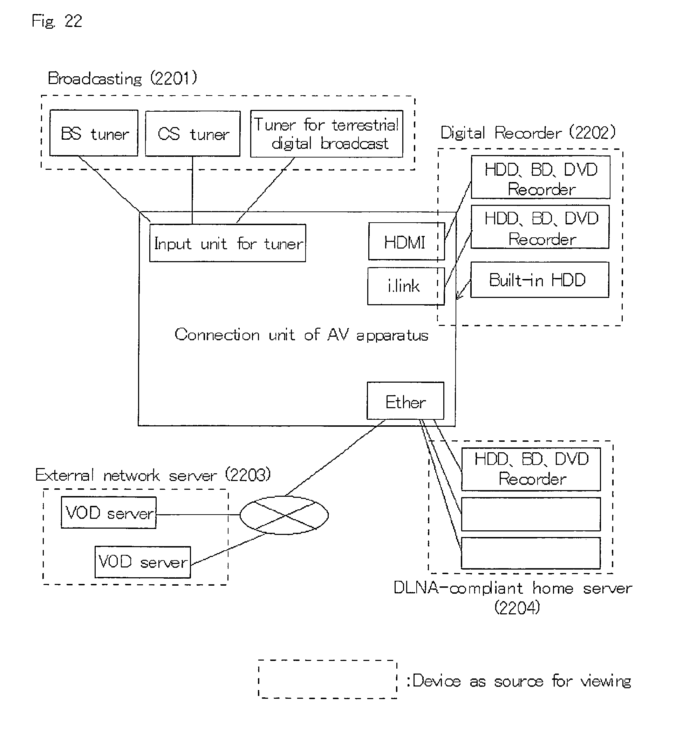

Additionally, as shown in Fig. 21, the devices as source for viewing may be considered not that one device is one device as source for viewing, but that one media is one device as source for viewing. Specifically, as shown in Fig. 22, examples of classification of the device as source for viewing include 'broadcasting' (2201) as device as source for viewing, 'digital recorder' (2202) as device as source for viewing, 'external network server' (2203) as device as source for viewing, and 'DLNA-compliant home server' (2204) as device as source for viewing.

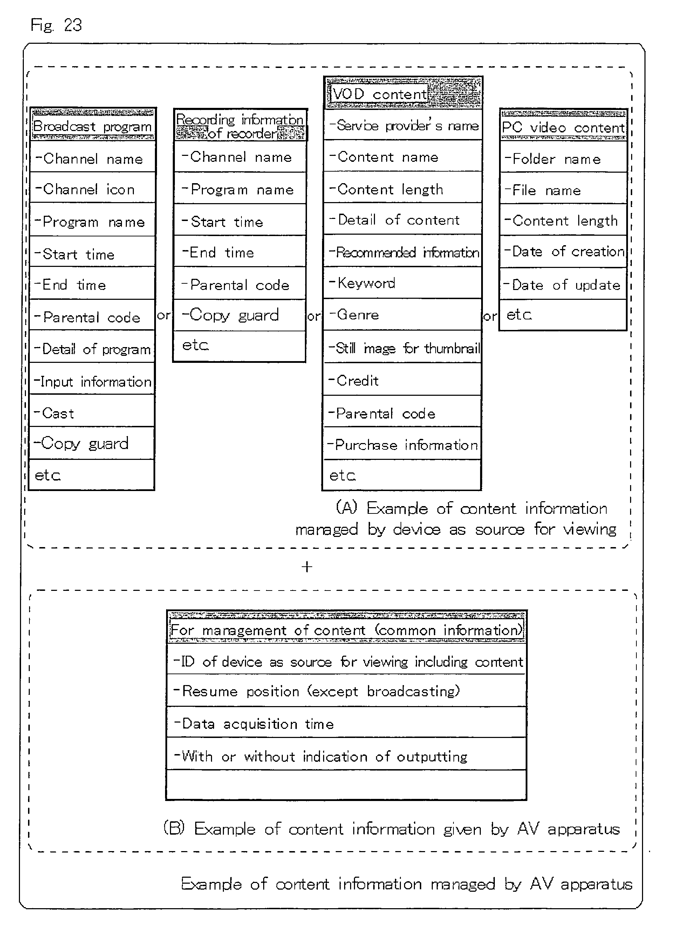

These have a feature that attribute information for the respective contents, stored and managed by the respective devices as source for viewing, is shared in the respective classifications. As shown in Fig. 23(A), examples of the device as source for viewing (2201) for broadcasting as media include BS tuner, CS tuner, Tuner for terrestrial digital broadcast, AM radio tuner, and FM radio tuner. Further, examples of attribute information which is correlated with content, received and managed, include Channel name, Channel icon, Program name, Start time, End time, Parental rate, Detail of program (summery of program and outline of program), Input information, Cast, and Copy guard. Meanwhile, examples of the device as source for viewing (2202) for program recorded by digital recording as media include HDD recorder, BD (Blue ray Disk) recorder, DVD recorder using HDMI connection or I. LINK, and these devices which are internal or external connected. Moreover, examples of the attribute information for the respective contents, stored and managed by the respective devices as source for viewing, include Channel name, Channel icon, Program name, Start time, End time, Parental rate, and Copy guard. Moreover, examples of the device as source for viewing (2203) for media provided by service such as VOD provided from external network server include VOD server outputting content via the internet, and various electronic devices mediating content outputted from the server. Moreover, examples of the attribute information for the respective contents, stored and managed by the respective devices as source for viewing, include Service provider's name, Content name, Content length, Detail of content, Recommended information, Keyword, Genre, Still image for thumbnail, Credit, Purchase information. Moreover, examples of various devices as source for viewing (2204) connected by DLNA system include HDD recorder, BD recorder, DVD recorder, general PC and other digital home appliances. Examples of the attribute information for the respective contents, stored and managed by the respective devices as source for viewing, include Folder name, File name, Date of creation, and Date of update. Note that, the after-mentioned concept of 'device as source for viewing' may be according to any classification described above (Fig. 21 or 22). Same applies throughout all embodiments in this specification.

The 'reception unit for list request' (0203) is configured to receive the content list request from the user. The 'content list request' is a request for displaying the list of the content, which is currently viewable or to be viewable in the future by the AV apparatus. For example, the reception unit for list request can acquire detail of the content list request by receiving infrared ray outputted from remote-operated device etc. Moreover, a configuration to receive the list request in wired communication, or a configuration to directly receive input through button operation for the AV apparatus may be used.

The 'acquisition unit for list' (0204) is configured to acquire the list from the device as source for viewing, that is currently connected. The acquired list may be stored. Here, the 'list' acquired by the acquisition unit for list is a list of content, which the device as source for viewing can provide to the user, and the attribute information of the content as shown in Fig. 23(A) may be included therein. Therefore, the acquisition unit for list acquires the list of program, which is currently broadcasted or is planned to be broadcasted, from the device as source for viewing such as receiver for broadcast or program, the content list, which is currently stored in an internal memory and can be outputted through reproduction etc, from the device as source for viewing such as a PC or a digital recorder, the content list, which is currently stored and can be outputted through reproduction etc, from the device as source for viewing such as HDD of the AV apparatus, and the content list, which can be received through downloading or streaming, and can be outputted through reproduction etc, from the device as source for viewing such as the external server (e.g., VOD server).

Moreover, for example, when receiving the content list request from the user, transmission request of the list may be sent to all devices as source for viewing currently being connected with the connection unit (0201), thereby acquiring all content lists of the devices as source for viewing currently being connected. Moreover, the transmission request may be sent to devices as source for viewing periodically connected with the connection unit (0201), thereby acquiring all content lists of the devices as source for viewing currently being connected. Moreover, when receiving the content list request from the user, one device as source for viewing may be specified, thereby acquiring the content list only from the specified device as source for viewing (the device as source for viewing whose content list is to be displayed). In such case, when receiving a content list request of another device as source for viewing, the content list is acquired each time only from the specified device as source for viewing. Note that, the method for specifying the 'one device as source for viewing' may be as follows. For example, when the content list of the device as source for viewing including the content is preferentially displayed according to the function of the after-mentioned 'controller for UI display' (0206), if the user inputs the content list request when no content list of the device as source for viewing is displayed on the display screen, the device as source for viewing including the content currently being displayed on the display screen may be specified. Moreover, when the content list of one device as source for viewing is displayed on the display screen, if the user operates a cross-shaped key, the device as source for viewing to be displayed subsequently may be specified in accordance with a predetermined order of the device as source for viewing. In order to implement this configuration, for example, when the reception unit for list request (0203) receives the UI display request, the acquisition unit for list (0204) checks the device as source for viewing currently being connected through the connection unit (0201), and generates a list of the devices as source for viewing currently being connected. Subsequently, predetermined order numbers are assigned to the devices as source for viewing in the generated list, and the numbers are stored. After receiving the user's operation by the cross-shaped key, the list generated and stored is utilized, thereby specifying one device as source for viewing.

Here, if the device as source for viewing is power-off and the list cannot be acquired, the UI may display that the list of the content included in the device as source for viewing is not available.

The 'UI display unit' (0205) is configured to display such that at least a part of the lists of the devices as source for viewing is selectable by utilizing UI shared by all devices as source for viewing. Here, the 'list of the devices as source for viewing' is the content list, which has been acquired from the device as source for viewing by the acquisition unit for list (0204) and can be provided to the user. The UI display unit is configured to display various content lists acquired from various devices as source for viewing using the common UI.

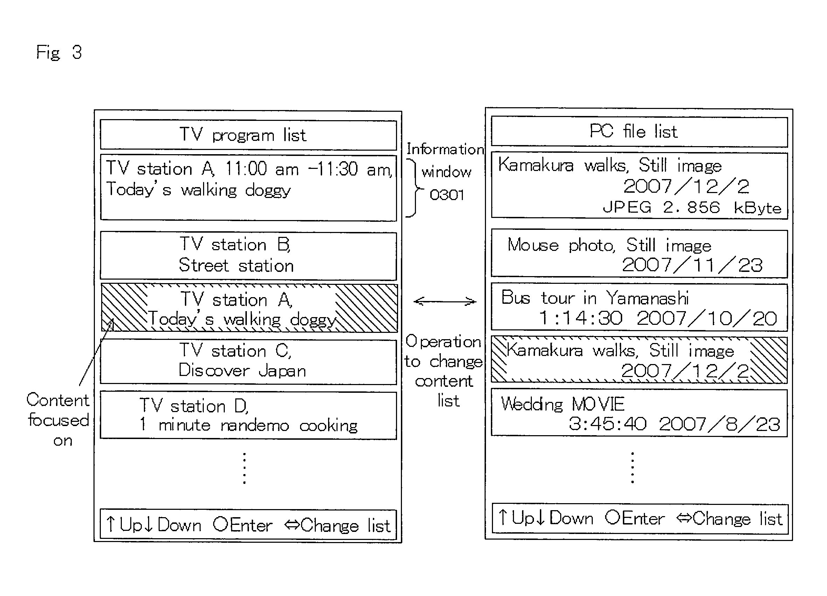

The common UI (hereinafter, referred to as 'common UI') is not limited, and may have a display form as shown in Fig. 3. Fig. 3 shows an example that currently broadcasted program list acquired from the device as source for viewing such as the receiver for broadcast or program is displayed by the common UI (left-hand side of Fig. 3), and an example that the content list, which is currently stored in an internal memory and can be outputted by the AV apparatus, acquired from the device as source for viewing such as a PC is displayed by the common UI (right-hand side of Fig. 3). The UI display unit displays the content list using the common UI as shown in Fig. 3 on the display screen. Note that, content lists of a plurality of devices as source for viewing may be displayed at once, or any one of content lists of a device as source for viewing may be displayed. When the content lists of a plurality of devices as source for viewing are displayed at once, only the content list may be displayed in full-screen without the content. Moreover, when any one of the content lists of a device as source for viewing is displayed, the content list may be displayed with the content. In this case, the content and the list are displayed together using the screen divided into two portions. Moreover, the content may be displayed in full-screen and the transparent list is superimposingly displayed on a part of the content. This configuration will be described in the following embodiment. As described above, when any one of the content lists of a device as source for viewing is displayed, the device as source for viewing the list of the device as source for viewing may be changed by operating the cross-shaped key. In this case, the content list of the device as source for viewing, which is different from the device as source for viewing including the content currently being displayed on the display screen, may be displayed.

Subsequently, a configuration of the common UI of Fig. 3 is described. In the common UI of Fig. 3, a plurality of sections for displaying information are arranged in a vertical line. In the top section, information for identifying the device as source for viewing is displayed, and the information window (0301) is provided thereunder. The list of information for identifying the content, which can be provided to the user, is displayed thereunder. The information window (0301) is a section for displaying the information of detail of the content provisionally selected by a cursor etc. from a plurality of contents arranged in the vertical line. Note that, the section for displaying the information specifying the content (information to be displayed) may be different with respect to each device as source for viewing as shown in Fig. 3. In a state that the one content is provisionally selected by a cursor etc, when receiving the input (selection) by pressing the enter key etc. by the user, the common UI of the present invention carries out processing to output the selected content when triggered by reception.

Here, the 'display of the list of the content, which can be provided' or the 'display of detailed information in the information window' may be implemented by utilizing the attribute information of the respective contents. Note that, the UI display unit does not need to use information of all items, and may extract only the information of the item necessary for the UI display, thereby displaying the UI by using only the extracted information. Specifically, only information of predetermined items to be displayed on the UI (e.g., 'content name' or 'time') may be utilized for displaying the UI, and information of the other items (e.g., 'content length') may not be utilized (i.e., not displayed on the UI). Moreover, as to the information of the predetermined items to be displayed on the UI, when any failure occurs in reading the information due to difference of data format, the items may be skipped, and only the readable information may be displayed on the UI. Moreover, when it is impossible to identify the item, the item may be skipped, and only the readable information may be displayed on the UI.

Note that, not indicated in Fig. 3, it is possible to vary color tone of the UI with respect to each list of the device as source for viewing. Moreover, when moving to the top or to the bottom of the list, by an operation to move upward or downward, it is possible to move to the bottom or to the top. Moreover, it is possible to group the lists of the same sort through the UI. For example, when the modem connected with the AV apparatus of the first embodiment can receive lists from a plurality of content distribution servers, it is possible to combine and display these lists as one list through the UI. Therefore, it is unnecessary to display the UI with respect to each device as source for viewing, and the lists of all devices as source for viewing may be integrated as a single UI. As to a concrete method for integrating the plurality of Uls into the single UI, the list information of the device as source for viewing acquired by the acquisition unit for list is converted so as to match the common UI format. Moreover, the list may be reorganized with respect to each category of content irrespective of the device as source for viewing, and may be displayed as a new list. These display form may be changed at any time by user's operation.

The 'signal processing unit' (0209) is configured to process content signal acquired from the device as source for viewing connected with the connection unit. Therefore, in order to output the content including moving image, still image, or sound etc. from a display or a speaker etc, content signal is decoded. This configuration is implemented by the conventional technology, so that description is omitted.

The 'output unit' (0202) is configured to output the content processed by the signal processing unit and the UI. Therefore, the output unit includes a display driver, a display, a speaker, and a video output circuit etc. Moreover, the output unit is configured to carry out selection from a plurality of inputs such as television input, video input, DVD input, and game input, and to output. Moreover, in order to simultaneously display the content and the UI on the display screen, means for synthesizing images is comprised. The means for synthesizing images may arbitrarily vary display areas of the content and the UI.

The 'controller for UI display' (0206) is configured to control such that the content list of the device as source for viewing including the content outputted by the output unit is preferentially displayed. Therefore, when the reception unit for list (0203) receives the list request, the controller for UI display identifies the content outputted from the output unit (0202), and the device as source for viewing including the content. Moreover, when the acquisition unit for list (0204) acquires the content lists from all devices as source for viewing currently being connected when triggered by the list request, the controller for UI display (0206) controls the UI display unit (0205) such that the content list of the device as source for viewing including the content currently outputted is initially (preferentially) displayed. Meanwhile, when the acquisition unit for list (0204) acquires the content list from only one device as source for viewing when triggered by the list request, the controller for UI display (0206) controls the UI display unit (0205) such that content list of the device as source for viewing including the content currently outputted is acquired.

Note that, the above function of the controller for UI display may be implemented by the following method.

At the outset, when acquiring the attribute information of the content as shown in Fig. 23(A), the acquisition unit for list (0204) may give the management information as shown in Fig. 23(B), and store the information with the attribute information (same applies throughout all embodiments in this specification). Examples of the 'management information' include 'the device as source for viewing including the content', 'resume position for reproduction (the resume position is at the head immediately after the acquisition, and in the case of broadcast content, this management information is excluded)', 'data acquisition time', and 'indication for identifying whether or not output is in progress'. Note that, this is an example, and other management information may be given.

In the above configuration, when the controller for UI display (0206) controls 'UI display unit (0205)', for example, if the reception unit for list request (0203) receives the list request, the acquisition unit for list (0204) acquires the content lists including the content attribute information from all devices as source for viewing currently being connected, and gives the management information as shown in Fig. 23(B) to the attribute information of the content as shown in Fig. 23(A), and stores them. Moreover, the acquisition unit for list (0204) sends all the management information and the attribute information to the UI display unit.

Subsequently, when receiving the information for identifying the content, which is currently outputted, processed, or acquired, (i.e., the content currently being displayed) from the output unit (0202), the signal processing unit (0209), or the connection unit (0201), the controller for UI display (0206) searches for the attribute information of the content by utilizing the management information and the attribute information stored in the acquisition unit for list (0204), thereby identifying the devices as source for viewing including the content. Subsequently, ID of the identified device as source for viewing and instruction signal to initially display the content list of the device as source for viewing specified by the ID are transmitted to the UI display unit (0205). Subsequently, by utilizing the ID of the identified device as source for viewing received from the controller for UI display (0206), the UI display unit (0205) extracts only the corresponding content attribute information from the content attribute information acquired from the acquisition unit for list (0204), thereby displaying the UI by using the extracted content attribute information.

Meanwhile, when the controller for UI display (0206) controls the 'acquisition unit for list (0204)', for example, if the reception unit for list request (0203) receives the content list request, the controller for UI display (0206) acquires the information for identifying the content, which is currently outputted, processed, or acquired, (i.e., the content currently being displayed) and the information for identifying the devices as source for viewing including the content from the output unit (0202), the signal processing unit (0209), or the connection unit (0201). Subsequently, ID for identifying the device as source for viewing specified by the acquired information, and instruction signal to acquire the content list from the device as source for viewing specified by the ID may be transmitted to the acquisition unit for list (0204).

Moreover, when the reception unit for list request (0203) receives the content list request, the acquisition unit for list (0204) acquires the content lists including the attribute information from all devices as source for viewing currently being connected, and gives the management information (Fig. 23(B)) to the respective attribute information of the contents (Fig. 23(A)), and stores them.

Subsequently, when receiving the information for identifying the content, which is currently outputted, processed, or acquired, (i.e., the content currently being displayed) from the output unit (0202), the signal processing unit (0209), or the connection unit (0201), the controller for UI display (0206) controls the acquisition unit for list (0204) such that the attribute information of the content included in the device as source for viewing, which is the same as the device including the identified content, is sent to the UI display unit (0205).

Subsequently, the acquisition unit for list (0204) identifies the ID of the device as source for viewing including the content currently outputted by utilizing the content attribute information and the management information, which have been stored, extracts the content attribute information, to which the same device as source for viewing ID (management information) is given, and sends the extracted content attribute information to the UI display unit (0205) for displaying the UI. Subsequently, the UI display unit (0205) may display the list of the contents by utilizing the content attribute information acquired from the acquisition unit for list (0204).

### <Concrete Configuration of First Embodiment>

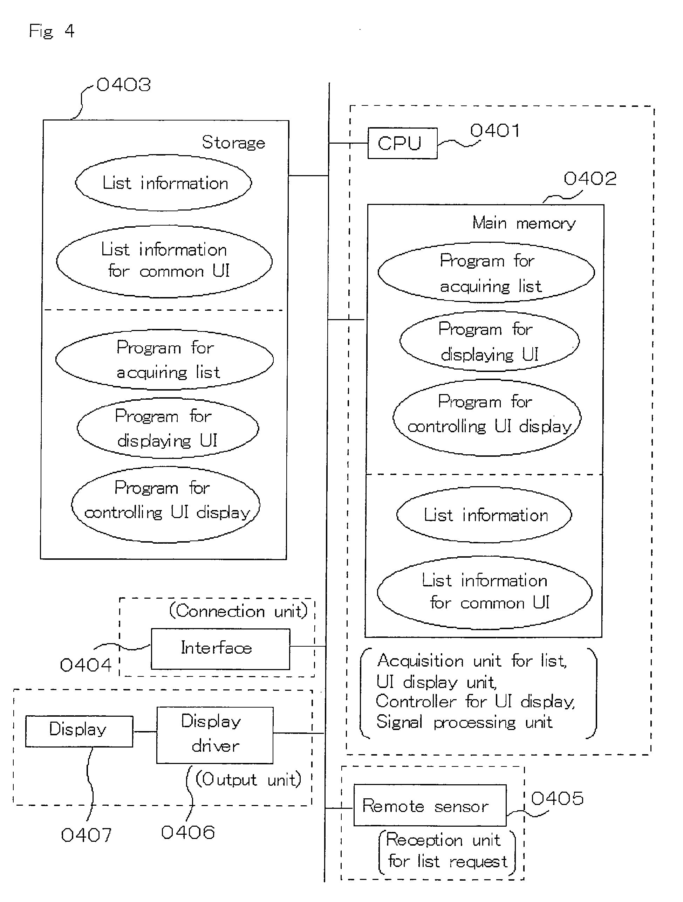

Subsequently, the respective hardware configurations of the AV apparatus of the first embodiment will be described. Fig. 4 is a schematic diagram showing an example of a hardware configuration of the AV apparatus of the first embodiment. The hardware configuration of the AV apparatus will be described with reference to Fig. 4. As shown in Fig.4, the acquisition unit for list, the UI display unit, the Controller for UI display, and the signal processing unit comprise a 'CPU' (0401) and a 'main memory' (0402). The AV apparatus comprises a 'storage (or storage medium)' (0403) for storing the list information and the program. Moreover, the connection unit comprises an 'interface' (0404) and the reception unit for list request comprises a 'remote sensor' (0405). Moreover, the AV apparatus comprises a 'display driver' (0406) and 'display' (0407) in the output unit. These are mutually connected through the data communication path such as system bus, thereby carrying out transmission/reception and processing of the information.

When the remote sensor receives the list request signal, the program for acquiring list sends the transmission request for the list to the device as source for viewing currently being connected through the interface, and stores the list information acquired according to the instruction at a predetermined address in the main memory. Here, when the transmission request of the list information is periodically send to the device as source for viewing, and the information is preliminarily stored into the storage, the program for acquiring list may acquire the list information from the storage.

Subsequently, the program for controlling UI display identifies the device as source for viewing including the content outputted to the display. Subsequently, based on the identification, the list of the device as source for viewing to be preferentially displayed upon displaying the UI is determined, thereby storing information of the determination at a predetermined address in the main memory.

Subsequently, the program for displaying UI carries out converting the list information of each device as source for viewing stored in the main memory to the data format matching the common UI by the CPU, and transmits the instruction to display the UI based on the information of the determination to the display driver.

The display driver receiving the instruction to display sends the display signal to display the UI to the display.

Hereinafter, with reference to flowcharts of Figs. 5 and 24 and sequence diagrams of Figs. 25 to 27, the processing flow of the AV apparatus of the first embodiment is described. The above processes can be executed by the program to cause a computer to execute, and the program can be recorded in a recording medium readable by the computer (the same applies to the entire specification).

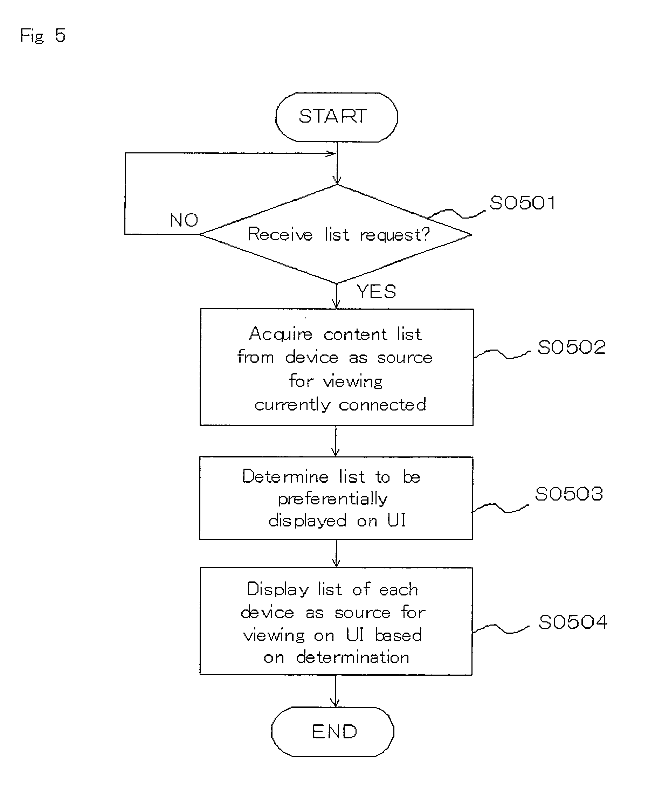

<Processing in the case when receiving the list request, the lists are acquired from all devices as source for viewing when triggered by the reception, thereby preferentially displaying the list of the device as source for viewing including the content currently outputted (Fig. 5)>

At the outset, in step S0501, it is determined whether the content list request has been received. Here, if it is determined that the content list request has been received, step S0502 is carried out. If it is determined that the content list request has not been received, the processing stays in a standby state. This processing is mainly carried out by the reception unit for list request. In step S0502, the content list is acquired from the device as source for viewing currently being connected. This processing is mainly carried out by the acquisition unit for list. In step S0503, the device as source for viewing including the content currently outputted is identified, and the list to be preferentially displayed is determined. This processing is mainly carried out by the control unit for UI display. In step S0504, based on the above determination, the processing for displaying the list of each device as source for viewing on the common UI is carried out. This processing is mainly carried out by the UI display unit and the output unit. Subsequently, when receiving the list request of the other device as source for viewing, the content list of the corresponding device as source for viewing is displayed by utilizing the content list acquired in the step S0502 and stored in the internal memory.

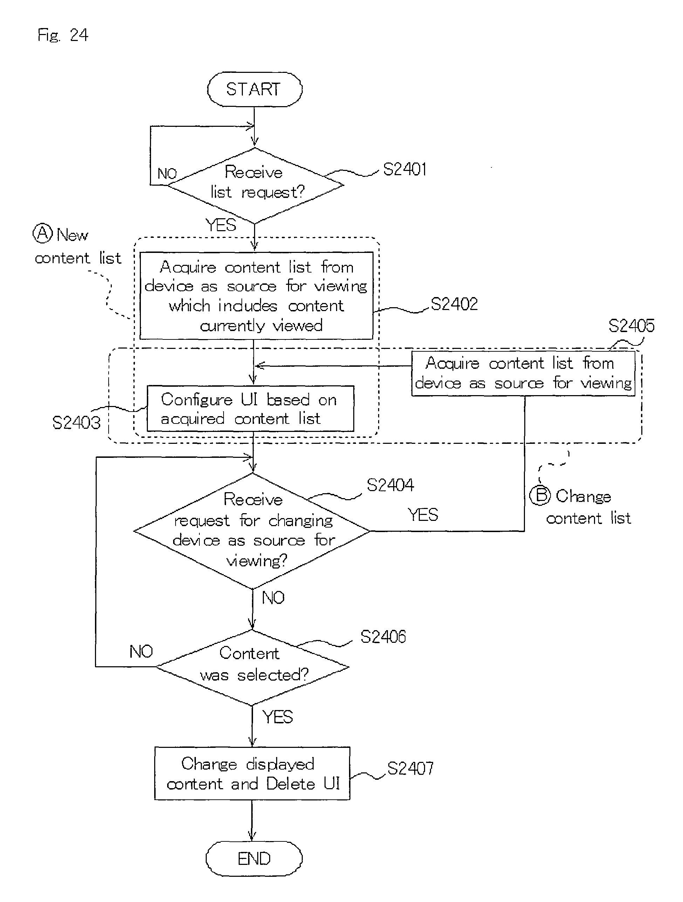

<Processing in the case when receiving the list request, the list is acquired from only the device as source for viewing including the content currently outputted when triggered by the reception, and is displayed, and when receiving the content list request of the other device as source for viewing, the content list of the corresponding device as source for viewing is acquired and displayed each time (Fig. 24)>

At the outset, in step S2401, it is determined whether the content list request has been received. Here, if it is determined that the content list request has been received, step S2402 is carried out. If it is determined that the content list request has not been received, the processing stays in a standby state. This processing is mainly carried out by the reception unit for list request. In step S2402, the content list is acquired from only the device as source for viewing including the content currently being displayed (viewed) on the display screen upon receiving the list request in the step S2401. This processing is mainly carried out by the acquisition unit for list and the control unit for UI display. In step S2403, the processing for displaying the acquired content list on the common UI is carried out. This processing is mainly carried out by the UI display unit and the output unit.

In step S2404, it is determined whether the request for changing device as source for viewing, which is for changing the content list currently being displayed on the display to the content list of the other device as source for viewing, has been received. Here, if it is determined that the request for changing device as source for viewing has been received, step S2405 is carried out. This processing is mainly carried out by the reception unit for list request. In step S2405, the content list is acquired from only the device as source for viewing, which has received the list request. This processing is mainly carried out by the acquisition unit for list. After that, the above described step S2403 is carried out, and the same step is repeated.

If it is determined in the step S2404 that the request for changing device as source for viewing has not been received, in step S2406, it is determined whether one content has been selected from the contents currently being displayed. Here, if it is determined that the selection has been done, step S2407 is carried out, and the content currently being displayed on the display is changed to the selected content, or the content list currently being displayed using the UI is deleted from the display.

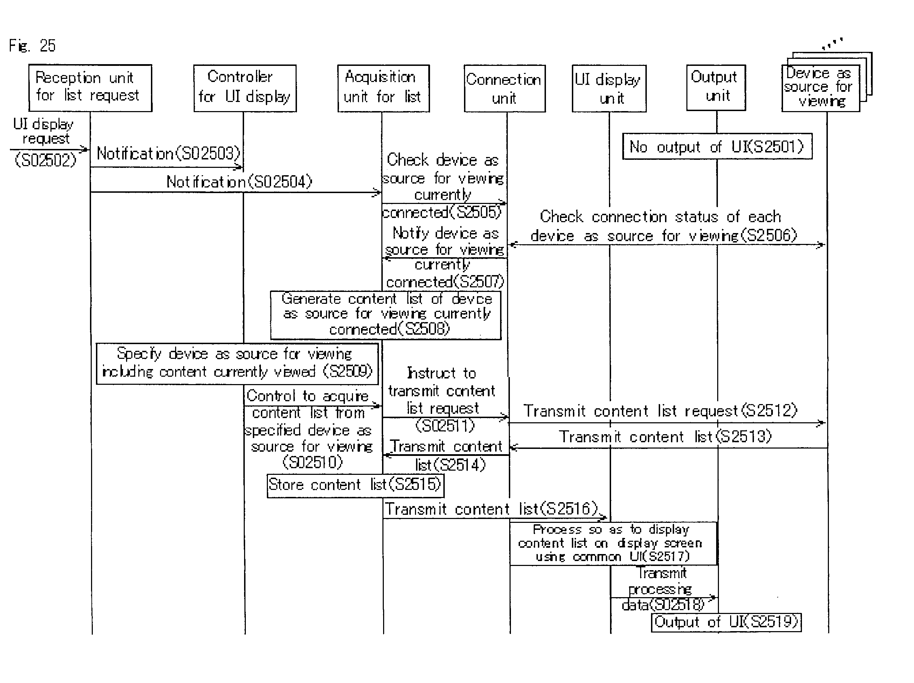

### <Detail of processing indicated as '(A) New content list' in Fig. 24 (Fig. 25)>

When the output unit does not output the UI to the display (S2501), if the reception unit for list request receives an input of UI display request (S2502), the reception unit for list request sends notifications to the UI display unit and the acquisition unit for list (S2503 and S2504).

The acquisition unit for list, which has received the notification in the step S2504, transmits a request for checking the device as source for viewing currently being connected to the connection unit (S2505). The connection unit, which has received the request, checks status of connection with the respective devices as source for viewing (S2506), and notifies the device as source for viewing currently being connected to the acquisition unit for list (S2507)., The acquisition unit for list, which has received the notification in the step S2507, in accordance with the notification, generates a list of devices as source for viewing currently being connected, and stores the list in the memory (S2508).

Subsequently, the control unit for UI display, which has received the notification in the step S2503, specifies the devices as source for viewing including the content currently being viewed (currently being outputted from the output unit) (S2509), and controls the acquisition unit for list such that the content list is acquired from the specified device as source for viewing (S2510). In accordance with the control by the control unit for UI display in the step S2510, the acquisition unit for list instructs the connection unit to transmit the content list request to the specified device as source for viewing (S2511). In accordance with the instruction from the acquisition unit for list in the step S2511, the connection unit transmits the content list request to the specified device as source for viewing (S2512), receives the content list transmitted from the device as source for viewing in response to the request (S2513), and transmits the received content list to the acquisition unit for list (S2514). After that, the acquisition unit for list stores the content list received in the step S 2514 in the memory (S2515), and transmits the acquired content list to the UI display unit (S2516). The UI display unit, which has acquired the content list, processes the content list in order to display the content list on the display using the common UI (S2517), and transmits the processed data to the output unit (S2518). The output unit, which has received the data, outputs the content list using the common UI (S2519).

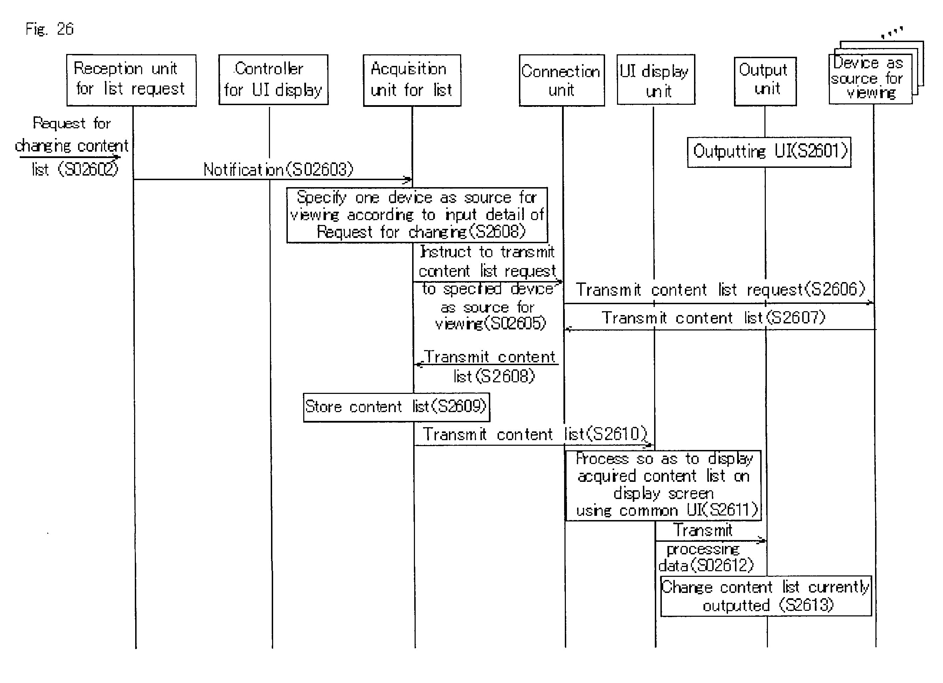

### <Detail of processing indicated as '(B) Change content list' in Fig. 24 (Fig. 26)>

When the output unit outputs the UI to the display (S2601), if the reception unit for list request receives an input of request for changing the content list currently being displayed to the content list of the other device as source for viewing by the user (S2602), the reception unit for list request sends a notification to the acquisition unit for list (S2603).

The acquisition unit for list, which has received the notification in the step S2603, in accordance with the detail of the input of the request for changing received by the reception unit for list request, specifies one device as source for viewing whose content list is to be displayed (S2604), and instructs the connection unit to transmit the content list request to the specified device as source for viewing (S2605). In accordance with the instruction from the acquisition unit for list in the step S2605, the connection unit transmits the content list request to the specified device as source for viewing (S2606), receives the content list transmitted from the device as source for viewing in response to the request (S2607), and transmits the received content list to the acquisition unit for list (S2608). After that, the acquisition unit for list stores the content list received in the step S 2608 in the memory (S2609), and transmits the acquired content list to the UI display unit (S2610). The UI display unit, which has acquired the content list, processes the content list in order to display the content list on the display using the common UI (S2611), and transmits the processed data to the output unit (S2612). The output unit, which has received the data, changes the content list outputted using the common UI to the content list, which has been received in the step S2612 (S2613).

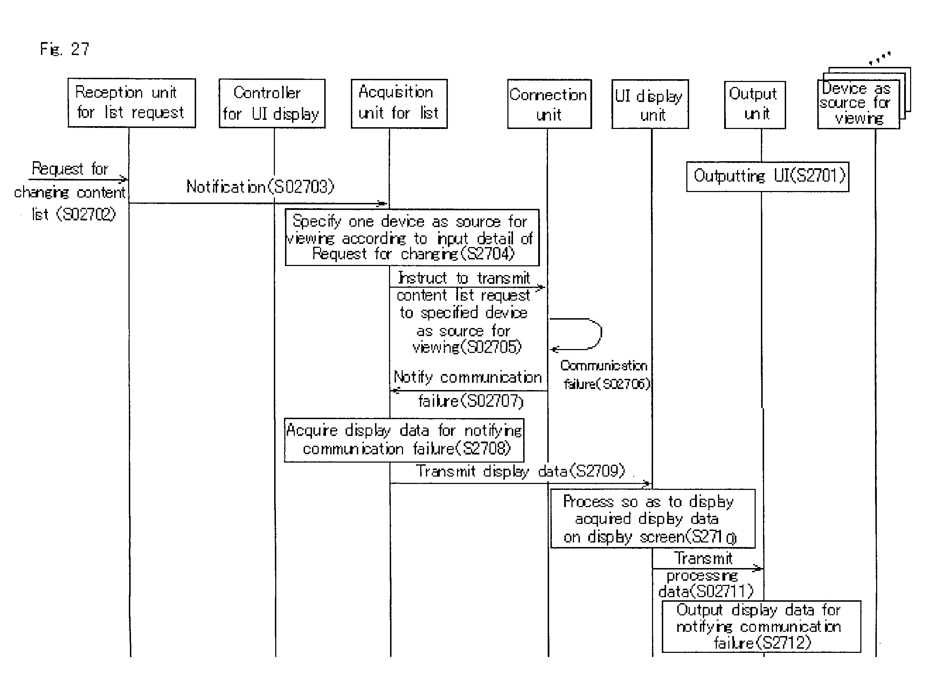

<Processing in the case that the content list has not been received due to communication failure in the communication with the device as source for viewing, which has transmitted the content list request (Fig. 27)>

When the output unit outputs the UI to the display (S2701), if the reception unit for list request receives an input of request for changing the content list currently being displayed to the content list of the other device as source for viewing by the user (S2702), the reception unit for list request sends a notification to the acquisition unit for list (S2703).

The acquisition unit for list, which has received the notification in the step S2703, in accordance with the detail of the input of the request for changing received by the reception unit for list request, specifies one device as source for viewing whose content list is to be displayed (S2704), and instructs the connection unit to transmit the content list request to the specified device as source for viewing (S2705).

When transmitting the content list request to the device as source for viewing in accordance with the instruction from the acquisition unit for list in the step S2705, if the communication with the specified device as source for viewing has failed due to any cause (S2706), the connection unit sends a notification to the acquisition unit for list (S2707).

The acquisition unit for list, which has received the notification in the step S2707, extracts the display data to notify the communication failure from the internal memory (S2708), and transmits the data to the UI display unit (S2709). The UI display unit, which has received the display data to notify the communication failure, processes the received data to be displayed on the display (S2710), and transmits the processed data to the output unit (S2711). The output unit, which has received the data, outputs the display data to notify the communication failure on the display (S2712).

### <Brief Description of Effects of First Embodiment>

According to the AV apparatus of the present invention, when the content list request from the user is received, the list of the device as source for viewing including the content outputted by the output unit is preferentially displayed on the UI, thereby reducing operation load on the user upon continuously selecting the content.

### <<Second Embodiment>>

### <Concept of Second Embodiment>

An AV apparatus of a second embodiment is basically same as that of the first embodiment, and is different in that the UI display is maintained without being deleted even if the content is selected through the UI display unit.

In the conventional technology, when the content is selected, the UI is deleted from the display screen, so that even when continuously selecting contents in one list, it is necessary to do an operation to display the UI again and an operation to acquire a desired list, redundantly. The AV apparatus of the second embodiment reduces the operation load on the user.

### <Configuration of Second Embodiment>

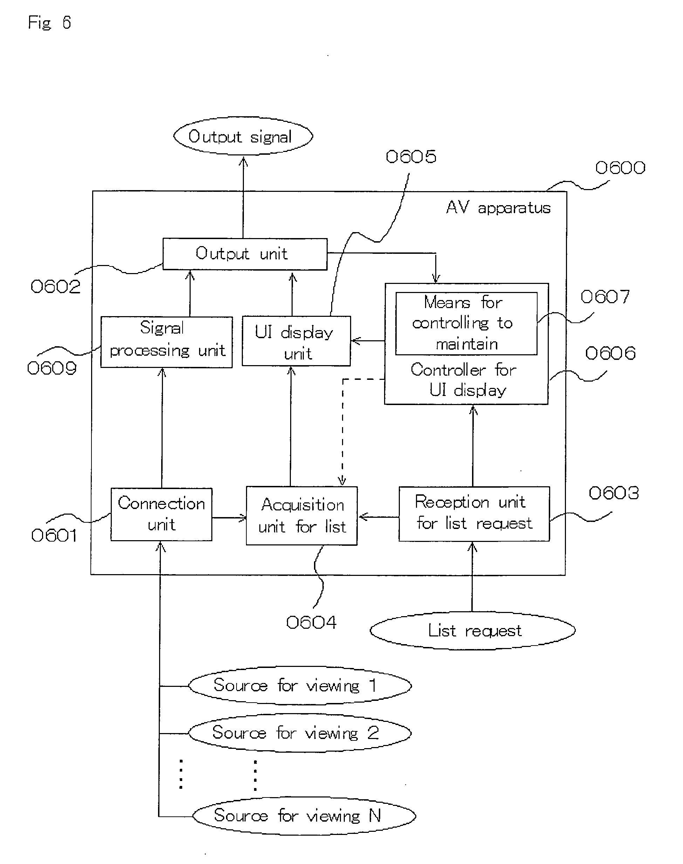

In Fig. 6, an 'AV apparatus' (0600) of the second embodiment comprises a 'connection unit' (0601), an 'output unit' (0602), a 'receiving unit for list request' (0603), an 'acquirer for list' (0604), a 'UI display unit' (0605), a 'controller for UI display' (0606), and a 'signal processing unit' (0609). The 'controller for UI display' comprises 'means for controlling to maintain' (0607). The configuration is basically the same as that of the first embodiment, so that the means for controlling to maintain, a difference from the first embodiment, is described hereinafter.

The 'means for controlling to maintain' (0607) is configured to maintain the display of the UI without deleting the UI even if the selection of the content is done through the UI display unit. Therefore, the content to be outputted (reproduced) is changed based on the operation through the UI, but the UI display is maintained. Accordingly, the user can continuously select content through the UI checking detail of the selected content through the display etc. Note that, in the second embodiment, it is mainly assumed that the UI is superimposingly displayed on the display screen where the content to be outputted (reproduced) is displayed. However, it is not unnecessary that they are displayed on the same display screen, and a display for the UI may be separately provided.

The means for controlling to maintain can store data indicating a status of the UI in the main memory or the storage etc. when the operation for the UI such as selecting content or moving focus (cursor). This makes it possible to maintain the display of the UI for arbitrary period of time even if the selection of the content is done through the UI display unit. Here, it is possible to maintain the display of the UI for a predetermined time (e.g., 5 seconds) after the selection of the content is done by the user through the UI display unit, and if the user does no operation to the UI during the time, the UI may be deleted.

Moreover, when the UI is temporarily deleted from the display screen by the user's operation, the latest display status of the UI may be reproduced from the main memory etc. upon redisplaying the UI. Moreover, when the AV apparatus is power-on again after the power-off, the display status of the UI before the power-off may be reproduced from the data in the storage.

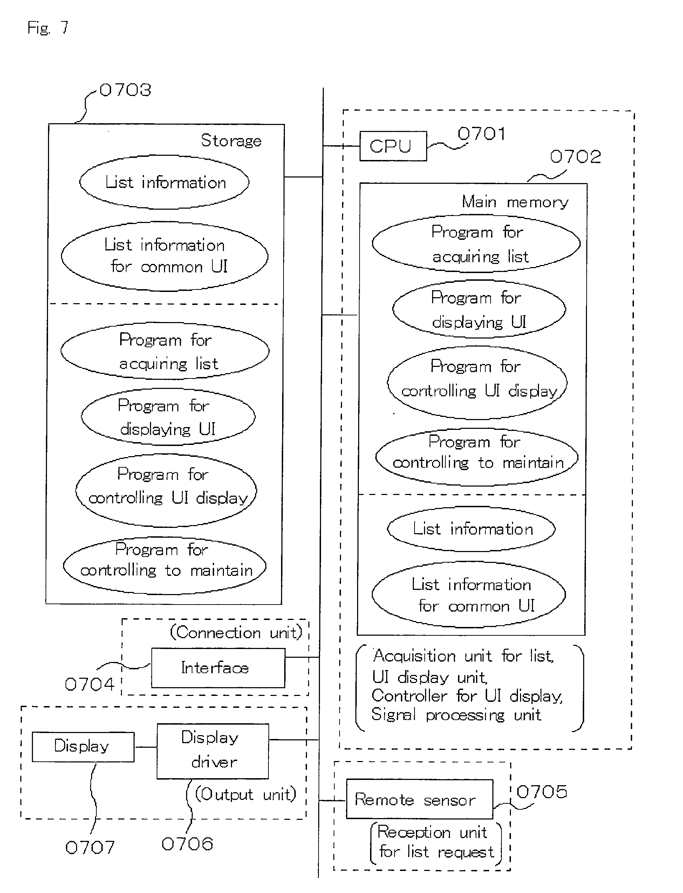

Fig. 7 is a diagram showing an example of hardware configuration of the AV apparatus of the second embodiment. The hardware configuration is basically the same as that of the first embodiment described with reference to Fig. 4. The AV apparatus of the second embodiment further comprises the program for controlling to maintain.

When the remote sensor receives the list request signal, the program for acquiring list sends the transmission request for the list to the device as source for viewing currently being connected through the interface, and stores the list information acquired according to the instruction at a predetermined address in the main memory. Here, when the transmission request of the list information is periodically send to the device as source for viewing, and the information is preliminarily stored into the storage, the program for acquiring list may acquire the list information from the storage.

Subsequently, the program for controlling UI display identifies the device as source for viewing including the content outputted to the display. Subsequently, based on the identification, the list of the device as source for viewing to be preferentially displayed upon displaying the UI is determined, thereby storing information of the determination at a predetermined address in the main memory.

Subsequently, the program for displaying UI carries out converting the list information of each device as source for viewing stored in the main memory to the data format matching the common UI by the CPU, and transmits the instruction to display the UI based on the information of the determination to the display driver. The display driver receiving the instruction to display sends the display signal to display the UI to the display.

When the selection of the content through the UI is done, the program for controlling to maintain stores the data indicating the status of the UI at the selection at a predetermined address in the main memory. Here, the data may be stored in the storage. Subsequently, program for controlling to maintain the UI display for a predetermined period of time after the selection of content is stored at a predetermined address in the main memory. Here, after the selection of content, the display may be maintained until the remote sensor receives an instruction to delete the UI from the user. The program for displaying UI sends an instruction to display the UI to the display driver. The display driver receiving the instruction to display sends the display signal to display the UI to the display.

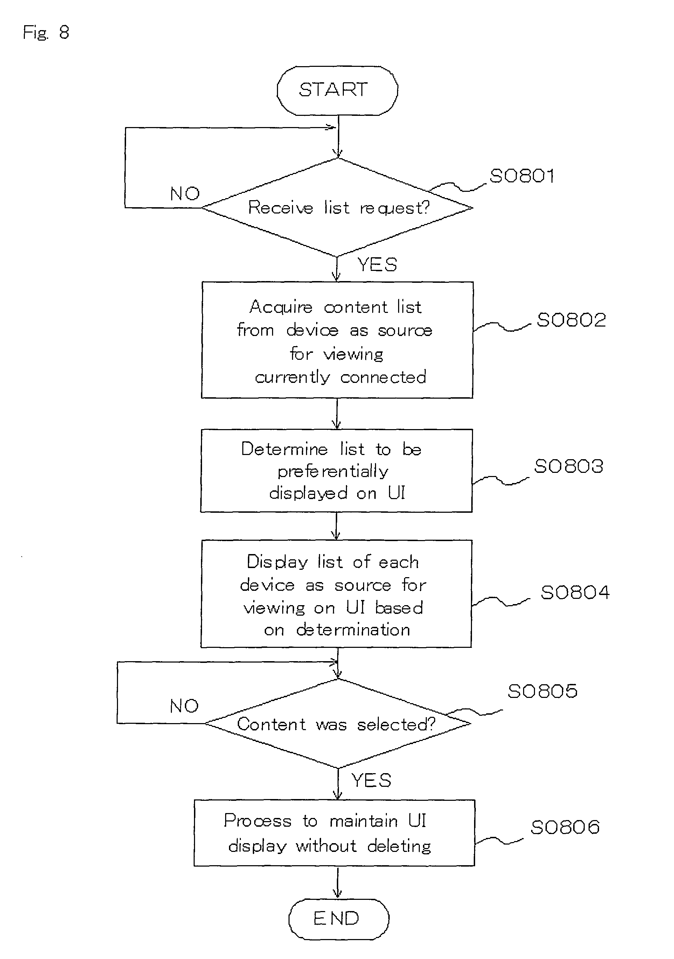

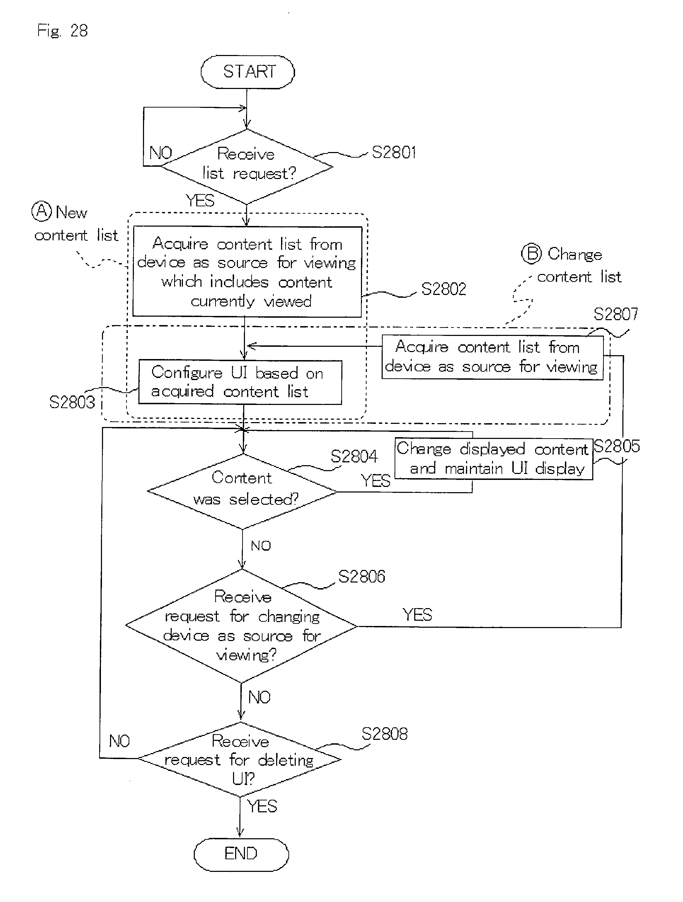

Hereinafter, with reference to flowcharts of Figs. 8 and 28, the processing flow of the AV apparatus of the second embodiment is described.

<Processing in the case when receiving the list request, the lists are acquired from all devices as source for viewing when triggered by the reception, thereby preferentially displaying the list of the device as source for viewing including the content currently outputted (Fig. 8)>

At the outset, in step S0801, it is determined whether the content list request has been received. Here, if it is determined that the content list request has been received, step S0802 is carried out. If it is determined that the content list request has not been received, the processing stays in a standby state. In step S0802, the content list is acquired from the device as source for viewing currently being connected. In step S0803, the device as source for viewing including the content currently outputted is identified, and the list to be preferentially displayed through the UI is determined. In step S0804, based on the above determination, the processing for displaying the list of each device as source for viewing on the common UI is carried out. In step S0805, it is determined whether the content list request has been selected. Here, if it is determined that the content list request has been selected, step S0806 is carried out. If it is determined that the content list request has not been selected, the processing stays in a standby state. In the step S0806, process for maintain the UI display without deleting is carried out. This processing is mainly carried out by the means for controlling to maintain of the controller for UI display.

<Processing in the case when receiving the list request, the list is acquired from only the device as source for viewing including the content currently outputted when triggered by the reception, and is displayed, and when receiving the content list request of the other device as source for viewing, the content list of the corresponding device as source for viewing is acquired and displayed each time (Fig. 28)>

At the outset, in step S2801, it is determined whether the content list request has been received. Here, if it is determined that the content list request has been received, step S2802 is carried out. If it is determined that the content list request has not been received, the processing stays in a standby state. In step S2802, the content list is acquired from only the device as source for viewing including the content currently being displayed (viewed) on the display screen upon receiving the list request in the step S2801. In step S2803, the processing for displaying the acquired content list on the common UI is carried out. This processing is mainly carried out by the UI display unit and the output unit.

In step S2804, it is determined whether one content has been selected from the content list currently being displayed on the display screen. Here, if it is determined that the content has been selected, step S2805 is carried out, thereby changing the content currently being displayed on the display screen to the selected content. Here, display of the common UI currently being displayed on the display screen is maintained.

In step S2806, it is determined whether the request for changing device as source for viewing, which is for changing the content list currently being displayed on the display to the content list of the other device as source for viewing, has been received. Here, if it is determined that the request for changing device as source for viewing has been received, step S2807 is carried out. In step S2807, the content list is acquired from only the device as source for viewing, which has received the list request. After that, the above described step S2803 is carried out, and the same step is repeated.

In step S2808, it is determined whether the request for deleting the UI from the display has been received. The UI display is maintained until it is determined that the request for deleting is received, and the determinations of the steps S2804, S2806, and S2808 are repeated.

### <Brief Description of Effects of Second Embodiment>

According to the AV apparatus of the present invention, when the content list request from the user is received, the list of the device as source for viewing including the content outputted by the output unit is preferentially displayed on the UI, and the UI display is maintained for arbitrary period of time after the selection of the content is done, thereby reducing operation load on the user upon continuously selecting the content.

### <<Third Embodiment>>

### <Concept of Third Embodiment>

An AV apparatus of a third embodiment is basically same as that of the first embodiment, and is different in that an 'in-viewing' indication is displayed on the list of the content corresponding to the UI, which has been selected. This makes it possible for the user to grasp the selected content on the UI at a glance, thereby reducing the operation load on the user.

### <Configuration of Third Embodiment>

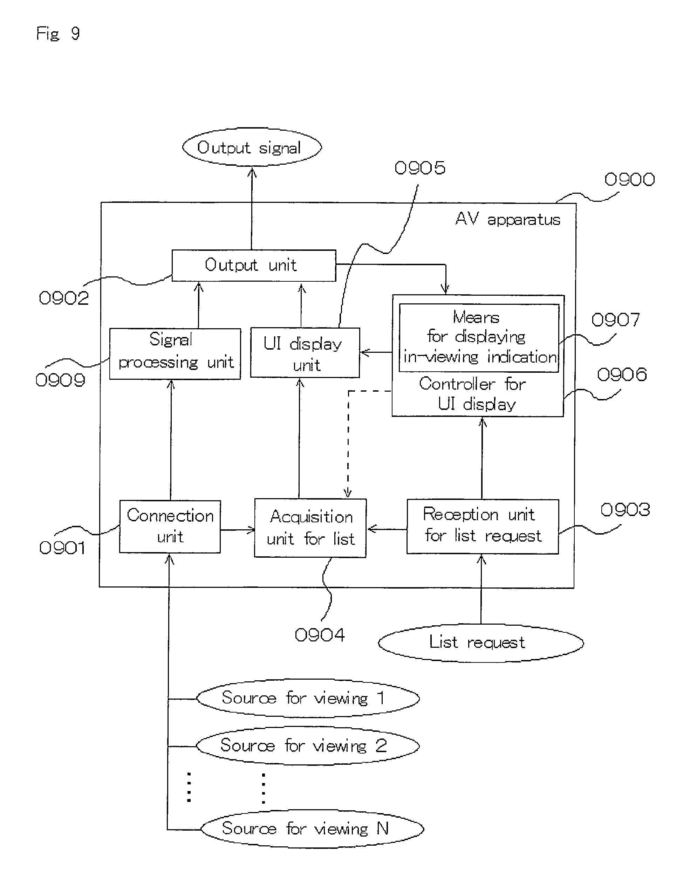

In Fig. 9, an 'AV apparatus' (0900) of the third embodiment comprises a 'connection unit' (0901), an 'output unit' (0902), a 'receiving unit for list request' (0903), an 'acquirer for list' (0904), a 'UI display unit' (0905), a 'controller for UI display' (0906), and a 'signal processing unit' (0909). The 'controller for UI display' comprises 'means for displaying 'in-viewing' indication' (0907). The configuration is basically the same as that of the first embodiment, so that the means for displaying 'in-viewing' indication, a difference from the first embodiment, is described hereinafter.

The 'means for displaying 'in-viewing' indication' (0907) is configured to display an 'in-viewing' indication, an indication indicating the content selected through the UI display unit, on the list of the content corresponding to the UI. This makes it possible to grasp the selected content on the UI at a glance.

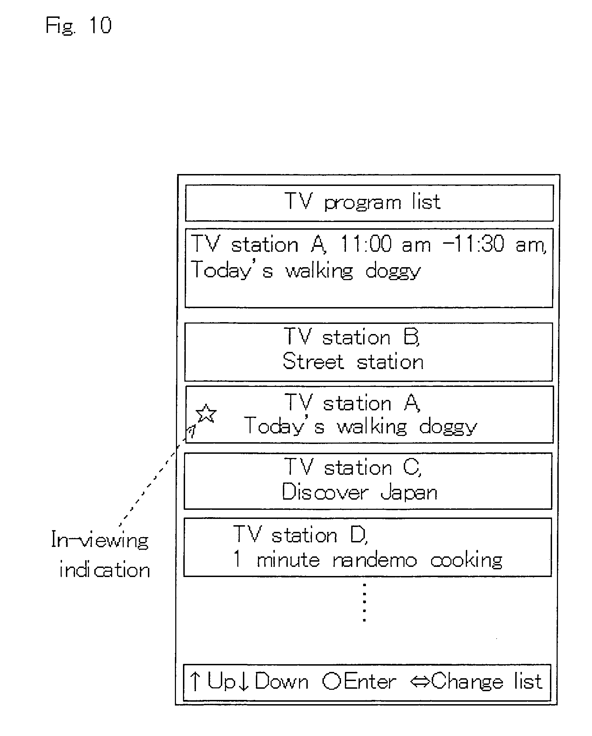

Examples of the in-viewing indication include a method for indication by adding a specific symbol to the list of the selected content as shown in Fig. 10, and a method for indication by displaying the corresponding portion of the list in different color tone from the other portion of the list. Here, in order to distinguish the portion of list of the content focused on from the selected portion of the list, they are displayed in different color tones.

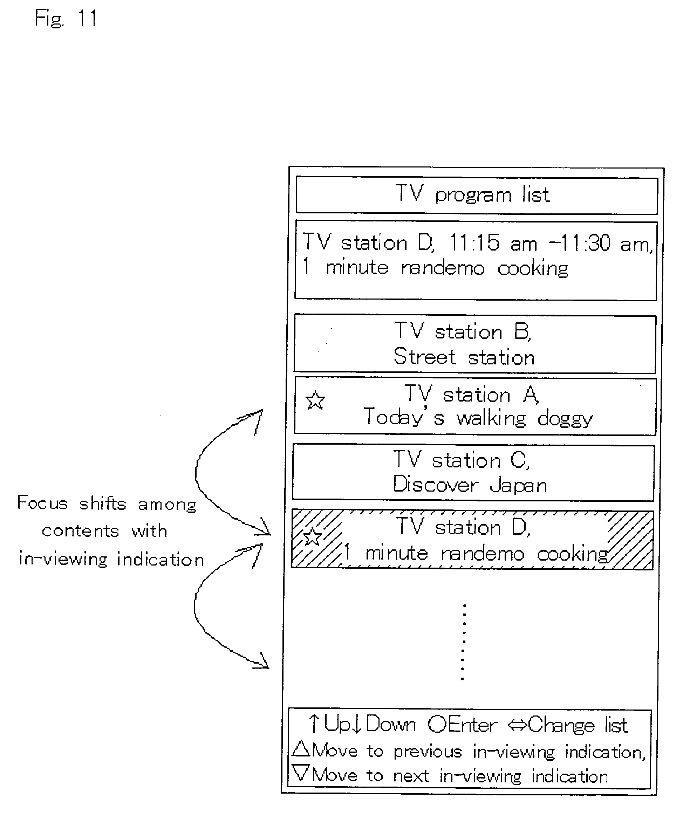

Moreover, as shown in Fig. 11, when the other content is selected after the selection of a content through the UI, the in-viewing indication based on the former selection is not deleted, and may be displayed with the in-viewing indication based on the latter selection. Therefore, a plurality of in-viewing indications may be displayed as a selection history on the UI. Here, a plurality of contents with in-viewing indications may be simultaneously reproduced using multi-screen, or a plurality of contents may be reproduced in order at a predetermined interval (e.g., every 30 seconds) in by switching the screen. Moreover, when selecting the content, the selection may be done by moving a focus skipping the contents without in-viewing indications through a predetermined operation (here, operation of pressing up or down button). Note that, the movement of the focus is not limited to the list of one device as source for viewing, may be in the scope of lists of a plurality of devices as source for viewing.

Moreover, by storing the selection history in the storage etc, the in-viewing indication may be displayed on the corresponding portion after the UI is deleted and redisplayed.

When the remote sensor receives the list request signal, the program for acquiring list sends the transmission request for the list to the device as source for viewing currently being connected through the interface, and stores the list information acquired according to the instruction at a predetermined address in the main memory. Here, when the transmission request of the list information is periodically send to the device as source for viewing, and the information is preliminarily stored into the storage, the program for acquiring list may acquire the list information from the storage.

Subsequently, the program for controlling UI display identifies the device as source for viewing including the content outputted to the display. Subsequently, based on the identification, the list of the device as source for viewing to be preferentially displayed upon displaying the UI is determined, thereby storing information of the determination at a predetermined address in the main memory.

Subsequently, the program for displaying UI carries out converting the list information of each device as source for viewing stored in the main memory to the data format matching the common UI by the CPU, and transmits the instruction to display the UI based on the information of the determination to the display driver. The display driver receiving the instruction to display sends the display signal to display the UI to the display.

When the selection of the content through the UI is done, the program for displaying in-viewing indication stores the information of selection operation at a predetermined address in the main memory. Subsequently, the processing for additionally displaying the in-viewing indication for the selected content on a portion of the list of the corresponding content in the UI is carried out through the CPU.

Subsequently, the program for displaying UI transmits an instruction to display the UI, to which the in-viewing indication has been added, to the display driver. The display driver receiving the instruction to display sends the display signal to display the UI, to which the in-viewing indication has been added, to the display.

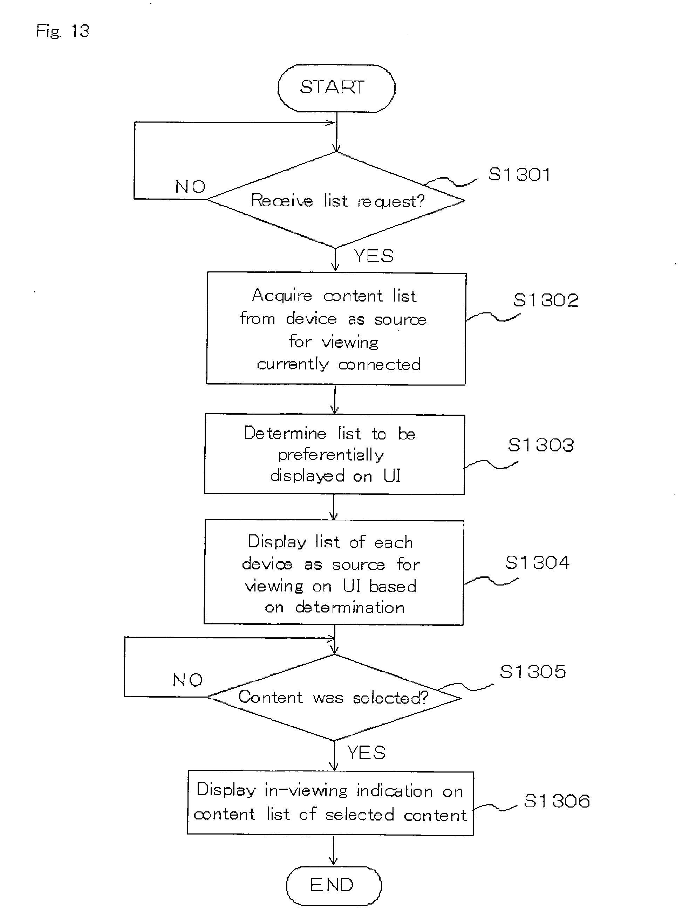

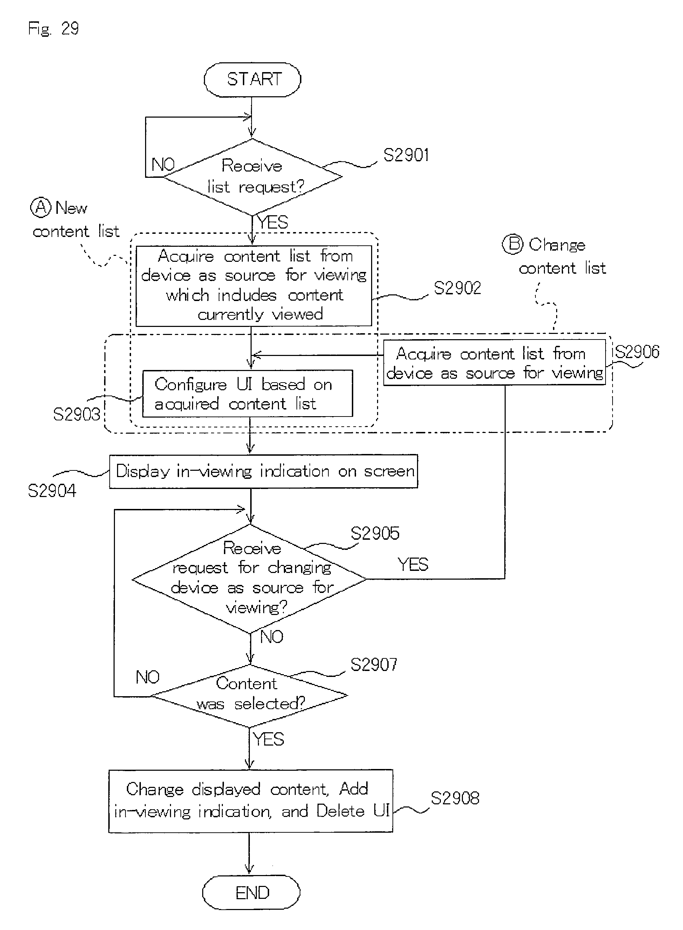

Hereinafter, with reference to flowcharts of Figs. 13 and 29, the processing flow of the AV apparatus of the third embodiment is described.

<Processing in the case when receiving the list request, the lists are acquired from all devices as source for viewing when triggered by the reception, thereby preferentially displaying the list of the device as source for viewing including the content currently outputted (Fig. 13)>

At the outset, in step S1301, it is determined whether the content list request has been received. Here, if it is determined that the content list request has been received, step S1302 is carried out. If it is determined that the content list request has not been received, the processing stays in a standby state. In step S1302, the content list is acquired from the device as source for viewing currently being connected. In step S1303, the device as source for viewing including the content currently outputted is identified, and the list to be preferentially displayed through the UI is determined. Moreover, process for displaying the in-viewing indication on the list of the content currently outputted is also carried out. This processing is mainly carried out by the means for controlling to maintain of the controller for UI display. In step S1304, based on the above determination, the processing for displaying the list of each device as source for viewing on the common UI is carried out. In step S1305, it is determined whether the content list request has been selected. Here, if it is determined that the content list request has been selected, step S1306 is carried out. If it is determined that the content list request has not been selected, the processing stays in a standby state. In the step S1306, process for displaying the in-viewing indication on the list of the selected content is carried out. This processing is mainly carried out by the means for displaying in-viewing indication of the controller for UI display.

<Processing in the case when receiving the list request, the list is acquired from only the device as source for viewing including the content currently outputted when triggered by the reception, and is displayed, and when receiving the content list request of the other device as source for viewing, the content list of the corresponding device as source for viewing is acquired and displayed each time (Fig. 29)>

At the outset, in step S2901, it is determined whether the content list request has been received. Here, if it is determined that the content list request has been received, step S2902 is carried out. If it is determined that the content list request has not been received, the processing stays in a standby state. In step S2902, the content list is acquired from only the device as source for viewing including the content currently being displayed (viewed) on the display screen upon receiving the list request in the step S2901. In step S2903, the processing for displaying the acquired content list on the common UI is carried out. In step S2904, the in-viewing indication is displayed for the content currently being viewed (outputted to the display) in the content list currently being displayed through the common UI.

In step S2905, it is determined whether the request for changing device as source for viewing, which is for changing the content list currently being displayed on the display to the content list of the other device as source for viewing, has been received. Here, if it is determined that the request for changing device as source for viewing has been received, step S2906 is carried out. In the step S2906, the content list is acquired from only the device as source for viewing, which has received the list request. After that, the above described step S2903 is carried out, and the same step is repeated.

If it is determined in the step S2905 that the request for changing device as source for viewing has not been received, in step S2907, it is determined whether one content has been selected from the contents currently being displayed. Here, if it is determined that the selection has been done, step S2908 is carried out, and the content currently being displayed on the display is changed to the selected content, or the content list currently being displayed using the UI is deleted from the display, the in-viewing indication is added to the selected content in the content list on the common UI, and the common UI is deleted.

Moreover, when the acquisition unit for list gives the management information to the acquired attribute information as described in the first embodiment, in the step s2908, an 'indication for identifying whether or not output is in progress' included in the management information of the selected content is rewritten to information for indicating 'output is in progress', or an 'indication for identifying whether or not output is in progress' included in the management information of the selected content is rewritten to information for indicating 'no output'.

### <Brief Description of Effects of Third Embodiment>

According to the AV apparatus of the present invention, when the content list request from the user is received, the list of the device as source for viewing including the content outputted by the output unit is preferentially displayed on the UI, and it is possible to grasp the selected content at a glance by the in-viewing indication, thereby reducing operation load on the user upon continuously selecting the content.

### <<Fourth Embodiment>>

### <Concept of Fourth Embodiment>

An AV apparatus of a fourth embodiment is basically same as that of the first embodiment, and is different in that an input to vary size of the UI to be displayed is received, and a proportion of the UI size and the content in a screen are controlled according to the variation. This makes it possible for the user to vary the proportion of the UI size and the content in the screen such that the user-friendliness is improved, thereby reducing the operation load on the user.

### <Configuration of Fourth Embodiment>

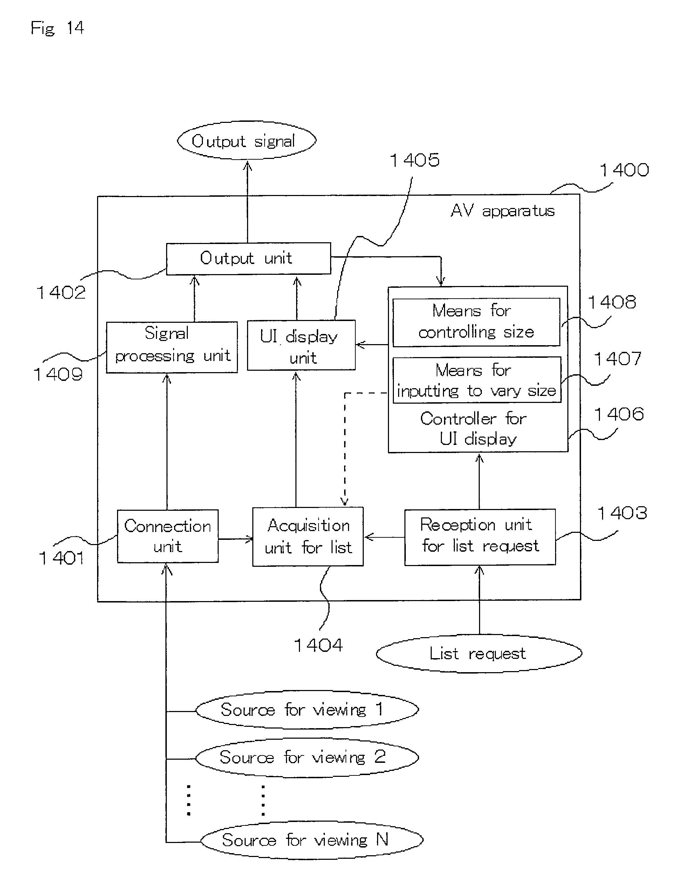

In Fig. 14, an 'AV apparatus' (1400) of the fourth embodiment comprises a 'connection unit' (1401), an 'output unit' (1402), a 'receiving unit for list request' (1403), an 'acquirer for list' (1404), a 'UI display unit' (1405), a 'controller for UI display' (1406), and a 'signal processing unit' (1409). The 'controller for UI display' comprises 'means for inputting to vary size' (1407) and 'means for controlling size' (1408). The configuration is basically the same as that of the first embodiment, so that the 'means for inputting to vary size and means for controlling size, differences from the first embodiment, are described hereinafter.

The 'means for inputting to vary size' (1407) is configured to receive an input to vary size of the UI to be displayed. Here, the terms 'receive an input to vary size of the UI' means acquisition of information of the input operation to vary the size of the UI. The acquisition of the information of operation is carried out by using a remote sensor etc. for acquiring a signal transmitted through a remote operation device etc. Here, the variation of the UI size may be carried out by selecting a specific size from a plurality of size choices, or by scaling up/down to arbitrary size.

The 'means for controlling size' (1408) is configured to control a proportion of the UI and the content in a screen, which are outputted from the output unit, according to variation by the means for inputting variation of size.

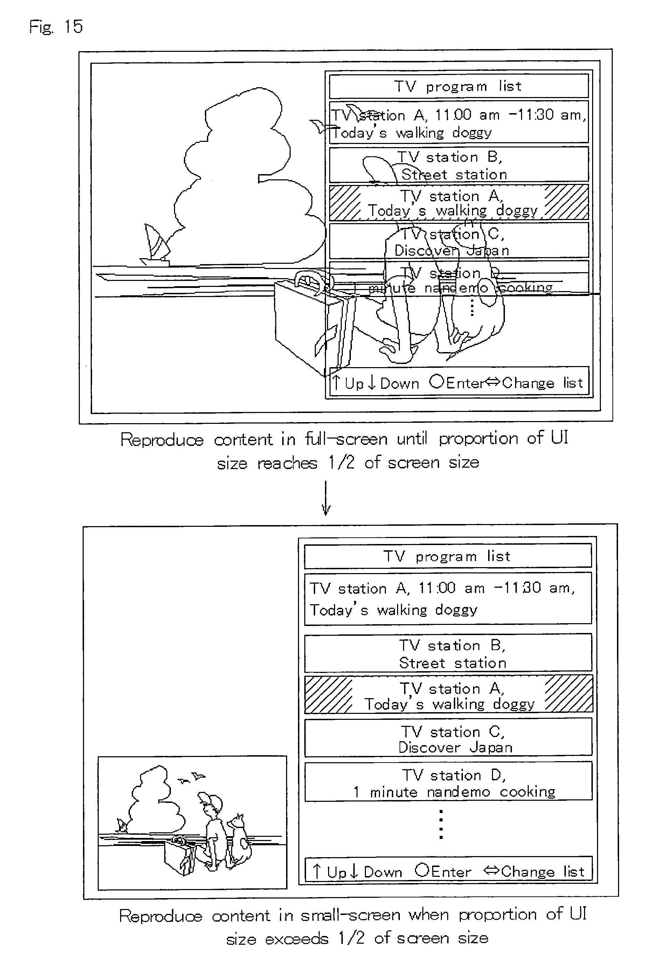

This makes it possible to reduce a display area of the reproduced content as the UI display area is scaled-up in the display screen. For example, as shown in Fig. 15, when the UI size reaches to a predetermined size for the screen size (e.g. 1/2 of the screen size), the reproduced content is reduced such that the entire reproduced content is viewable.

When the remote sensor receives the list request signal, the program for acquiring list sends the transmission request for the list to the device as source for viewing currently being connected through the interface, and stores the list information acquired according to the instruction at a predetermined address in the main memory. Here, when the transmission request of the list information is periodically send to the device as source for viewing, and the information is preliminarily stored into the storage, the program for acquiring list may acquire the list information from the storage.

Subsequently, the program for controlling UI display identifies the device as source for viewing including the content outputted to the display. Subsequently, based on the identification, the list of the device as source for viewing to be preferentially displayed upon displaying the UI is determined, thereby storing information of the determination at a predetermined address in the main memory.

Subsequently, the program for displaying UI carries out converting the list information of each device as source for viewing stored in the main memory to the data format matching the common UI by the CPU, and transmits the instruction to display the UI based on the information of the determination to the display driver. The display driver receiving the instruction to display sends the display signal to display the UI to the display.

When the remote sensor receives the signal for inputting to vary size, the program for inputting to vary size stores the received information at a predetermined address in the main memory, and executes processing for calculating numerical data indicating the UI size from the information through the CPU.

The program for controlling size executes processing for controlling a proportion of the UI size and the content in a screen, which are to be displayed on the screen, through the CPU based on the numerical data. As a concrete example of the control, it is determined through the CPU whether the UI size exceeds the predetermined size, and if so, the reproduction screen of the content is reduced.

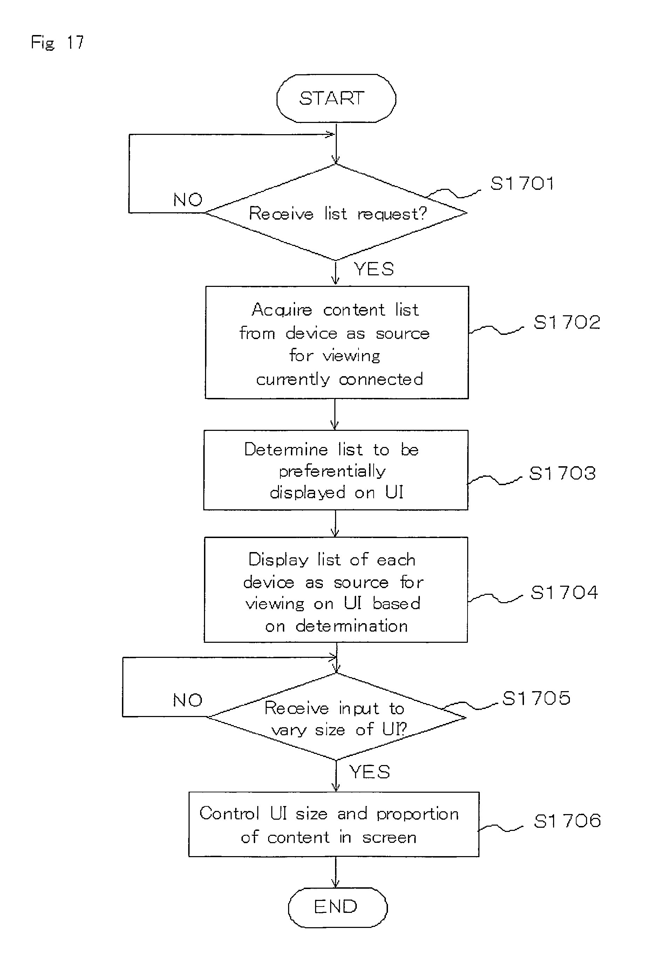

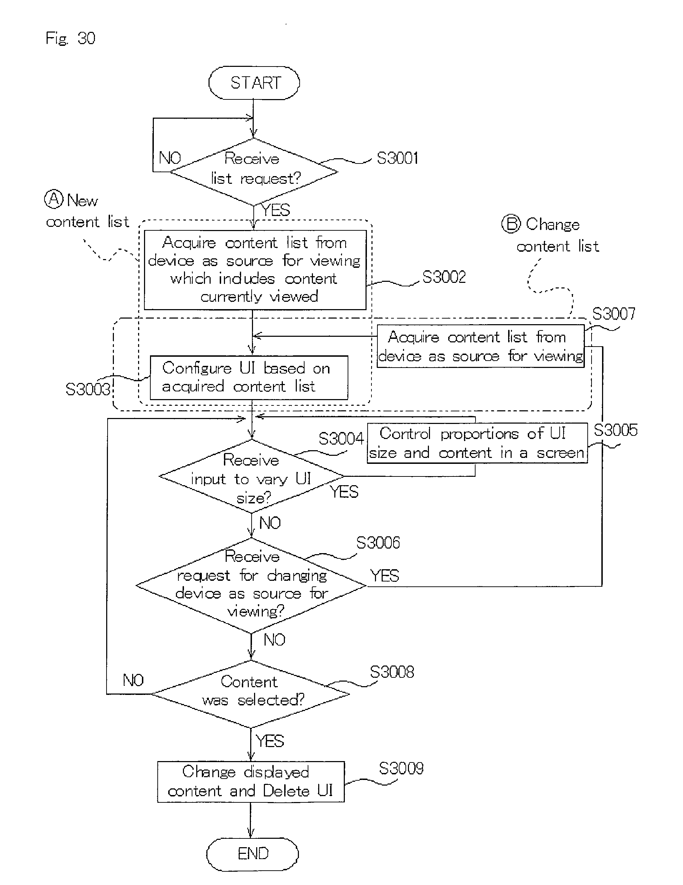

Hereinafter, with reference to flowcharts of Figs. 17 and 30, the processing flow of the AV apparatus of the fourth embodiment is described.

<Processing in the case when receiving the list request, the lists are acquired from all devices as source for viewing when triggered by the reception, thereby preferentially displaying the list of the device as source for viewing including the content currently outputted (Fig. 17)>

At the outset, in step S1701, it is determined whether the content list request has been received. Here, if it is determined that the content list request has been received, step S1702 is carried out. If it is determined that the content list request has not been received, the processing stays in a standby state. In step S1702, the content list is acquired from the device as source for viewing currently being connected. In step S1703, the device as source for viewing including the content currently outputted is identified, and the list to be preferentially displayed through the UI is determined. In step S1704, based on the above determination, the processing for displaying the list of each device as source for viewing on the common UI is carried out. In step S1705, it is determined whether the input to vary size has been received. Here, if it is determined that the input to vary size has been received, step S1706 is carried out. If it is determined that the content list request has not been selected, the processing stays in a standby state. In the step S1306, process for displaying the in-viewing indication on the list of the selected content is carried out. This processing is mainly carried out by the means for inputting to vary size of the controller for UI display.

In step S1706, control of the proportion of the UI size and the content in a screen, which are to be displayed on the screen, is carried out according to the variation. This processing is mainly carried out by the means for controlling size of the controller for UI display.

<Processing in the case when receiving the list request, the list is acquired from only the device as source for viewing including the content currently outputted when triggered by the reception, and is displayed, and when receiving the content list request of the other device as source for viewing, the content list of the corresponding device as source for viewing is acquired and displayed each time (Fig. 30)>

At the outset, in step S3001, it is determined whether the content list request has been received. Here, if it is determined that the content list request has been received, step S3002 is carried out. If it is determined that the content list request has not been received, the processing stays in a standby state. In step S3002, the content list is acquired from only the device as source for viewing including the content currently being displayed (viewed) on the display screen upon receiving the list request in the step S3001. In step S3003, the processing for displaying the acquired content list on the common UI is carried out.

In step S3004, it is determined whether the input to vary size of the UI has been received. Here, if it is determined that the input to vary size of the UI has been received, step S3005 is carried out. In the step S3005, in accordance with the input detail in the step S3004, the size of the UI to be displayed on the display is varied, and the proportion of the content in a screen is controlled.

In step S3006, it is determined whether the request for changing device as source for viewing, which is for changing the content list currently being displayed on the display to the content list of the other device as source for viewing, has been received. Here, if it is determined that the request for changing device as source for viewing has been received, step S3007 is carried out. In the step S3007, the content list is acquired from only the device as source for viewing, which has received the list request. After that, the above described step S3003 is carried out, and the same step is repeated.

If it is determined in the step S3004 that the request for changing device as source for viewing has not been received, in step S3008, it is determined whether one content has been selected from the contents currently being displayed. Here, if it is determined that the selection has been done, step S3009 is carried out, and the content currently being displayed on the display is changed to the selected content, or the content list currently being displayed using the UI is deleted from the display.

### <Brief Description of Effects of Fourth Embodiment>

According to the AV apparatus of the present invention, when the content list request from the user is received, the list of the device as source for viewing including the content outputted by the output unit is preferentially displayed on the UI, and it is possible to vary the proportion of the UI size and the content in the screen such that the user-friendliness is improved, thereby reducing operation load on the user upon continuously selecting the content.

### <<Fifth Embodiment>>

### <Concept of Fifth Embodiment>

An AV apparatus of a fifth embodiment is basically same as that of the first embodiment, and is different in that the UI to be displayed is made to be transparent, and is superimposingly displayed on a area in the screen indicated by the outputted content. This makes it possible to superimposingly display the UI on the area in the screen indicated by the content in a user-friendly manner, thereby reducing the operation load on the user.

### <Configuration of Fifth Embodiment>

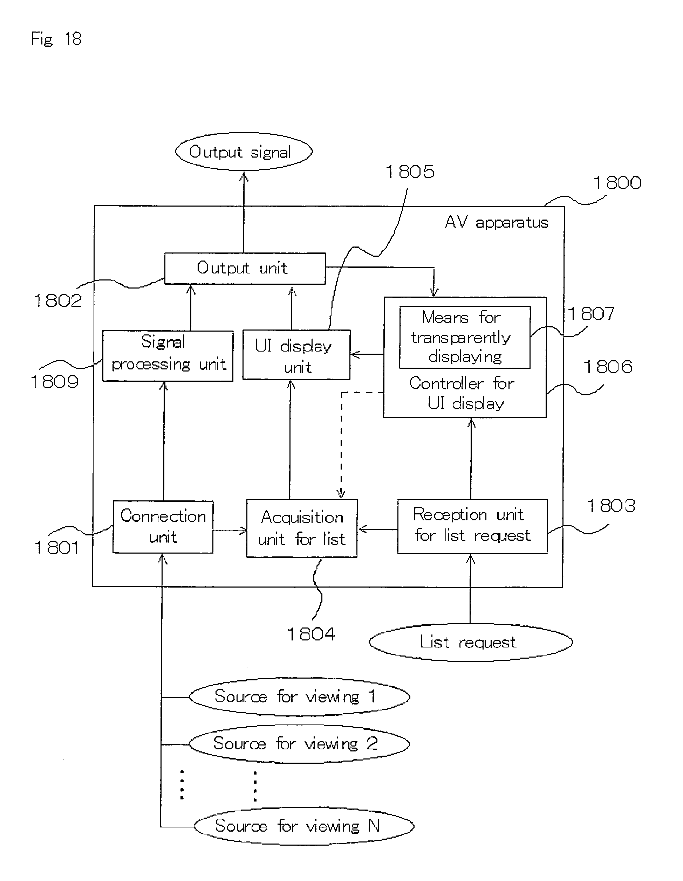

In Fig. 18, an 'AV apparatus' (1800) of the fourth embodiment comprises a 'connection unit' (1801), an 'output unit' (1802), a 'receiving unit for list request' (1803), an 'acquirer for list' (1804), a 'UI display unit' (1805), a 'controller for UI display' (1806), and a 'signal processing unit' (1809). The 'controller for UI display' comprises 'means for transparently displaying' (1807). The configuration is basically the same as that of the first embodiment, so that the means for transparently displaying, which is a difference from the first embodiment, is described hereinafter.

The 'means for transparently displaying' (1807) is configured to make the UI to be displayed transparent, and superimposingly displaying the UI on an area in the screen indicated by the content outputted from the output unit. This makes it possible for the user to select the content checking the reproduction detail of the content, which is originally hidden behind the UI display. For reference, a conceptual diagram in the lower side of Fig. 1 shows a case that the UI to be displayed is made to be transparent, and is outputted.

Here, based on the information from the output unit, when the content is not outputted, the UI may be displayed without being made to be transparent, and when the content is not outputted, the UI may be displayed with being made to be transparent.

Moreover, the UI may be displayed with being made to be transparent when receiving a signal to make the UI transparent from the user. Here, transparent rate etc. of the UI may be appropriately determined. Moreover, when displaying the UI, the UI may be always made to be transparent and may be displayed.

When the remote sensor receives the list request signal, the program for acquiring list sends the transmission request for the list to the device as source for viewing currently being connected through the interface, and stores the list information acquired according to the instruction at a predetermined address in the main memory. Here, when the transmission request of the list information is periodically send to the device as source for viewing, and the information is preliminarily stored into the storage, the program for acquiring list may acquire the list information from the storage.

Subsequently, the program for controlling UI display identifies the device as source for viewing including the content outputted to the display. Subsequently, based on the identification, the list of the device as source for viewing to be preferentially displayed upon displaying the UI is determined, thereby storing information of the determination at a predetermined address in the main memory.

When it is determined that the processing by the program for controlling UI display has been executed, the program for transparently displaying executes a processing to make the UI to be displayed transparent through the CPU.

Subsequently, the program for displaying UI carries out converting the list information of each device as source for viewing stored in the main memory to the data format matching the common UI by the CPU, and transmits the instruction to display the transparent UI based on the information of the determination to the display driver. The display driver receiving the instruction to display sends the display signal to display the transparent UI to the display.

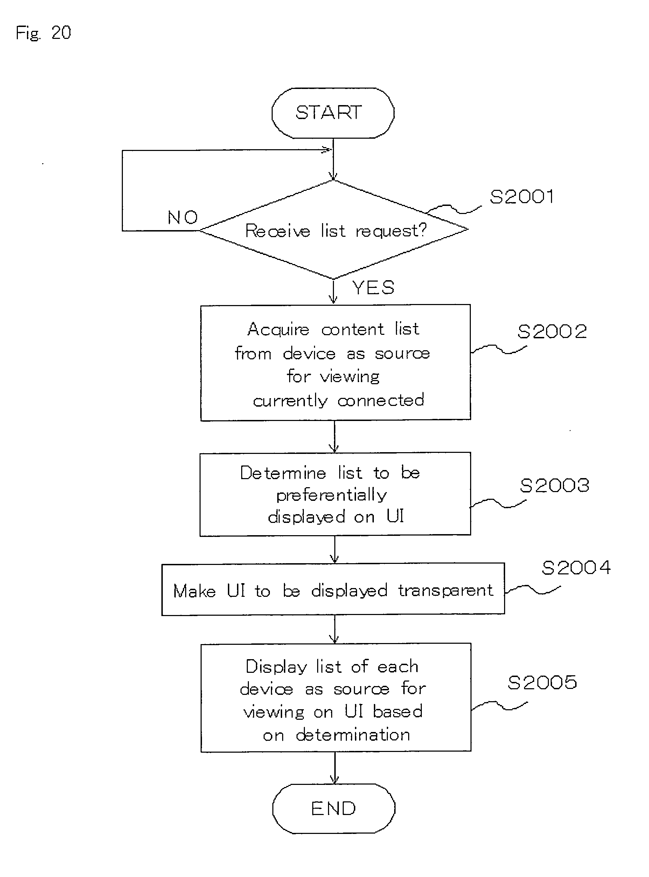

Hereinafter, with reference to a flowchart of Fig. 20, the processing flow of the AV apparatus of the fifth embodiment is described.

<Processing in the case when receiving the list request, the lists are acquired from all devices as source for viewing when triggered by the reception, thereby preferentially displaying the list of the device as source for viewing including the content currently outputted (Fig. 20)>

At the outset, in step S2001, it is determined whether the content list request has been received. Here, if it is determined that the content list request has been received, step S2002 is carried out. If it is determined that the content list request has not been received, the processing stays in a standby state. In step S2002, the content list is acquired from the device as source for viewing currently being connected. In step S2003, the device as source for viewing including the content currently outputted is identified, and the list to be preferentially displayed through the UI is determined.

In step S1704, based on the above determination, the processing for displaying the list of each device as source for viewing on the common UI is carried out. In step S1705, it is determined whether the input to vary size has been received. Here, if it is determined that the input to vary size has been received, step S1706 is carried out. If it is determined that the content list request has not been selected, the processing stays in a standby state. In the step S1306, process for displaying the in-viewing indication on the list of the selected content is carried out. This processing is mainly carried out by the means for inputting to vary size of the controller for UI display.

In step S1706, control of the proportion of the UI size and the content in a screen, which are to be displayed on the screen, is carried out according to the variation. This processing is mainly carried out by the means for controlling size of the controller for UI display.

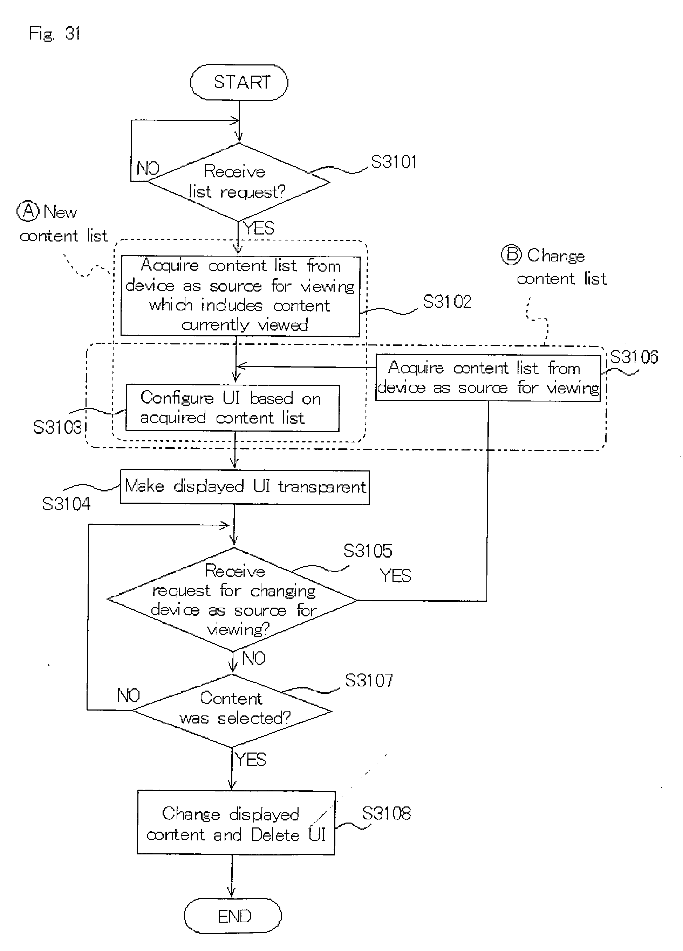

<Processing in the case when receiving the list request, the list is acquired from only the device as source for viewing including the content currently outputted when triggered by the reception, and is displayed, and when receiving the content list request of the other device as source for viewing, the content list of the corresponding device as source for viewing is acquired and displayed each time (Fig. 31)>

At the outset, in step S3101, it is determined whether the content list request has been received. Here, if it is determined that the content list request has been received, step S3102 is carried out. If it is determined that the content list request has not been received, the processing stays in a standby state. In step S3102, the content list is acquired from only the device as source for viewing including the content currently being displayed (viewed) on the display screen upon receiving the list request in the step S3101. In step S3103, the processing for displaying the acquired content list on the common UI is carried out. Moreover, in the step S3104, the common transparent UI is superimposingly displayed on the display currently displaying the content.

In step S3105, it is determined whether the request for changing device as source for viewing, which is for changing the content list currently being displayed on the display to the content list of the other device as source for viewing, has been received. Here, if it is determined that the request for changing device as source for viewing has been received, step S3106 is carried out. In the step S3106, the content list is acquired from only the device as source for viewing, which has received the list request. After that, the above described step S3103 is carried out, and the same step is repeated.

If it is determined in the step S3105 that the request for changing device as source for viewing has not been received, in step S3107, it is determined whether one content has been selected from the contents currently being displayed. Here, if it is determined that the selection has been done, step S3108 is carried out, and the content currently being displayed on the display is changed to the selected content, or the common UI is deleted from the display.

### <Brief Description of Effects of Fifth Embodiment>

According to the AV apparatus of the present invention, when the content list request from the user is received, the list of the device as source for viewing including the content outputted by the output unit is preferentially displayed on the UI, and it is possible to superimposingly display the UI on the area in the screen indicated by the content in a user-friendly manner, thereby reducing operation load on the user upon continuously selecting the content.

### BRIEF DESCRIPTION OF THE DRAWINGS

Fig. 1 is a schematic diagram showing an AV apparatus of a first embodiment.
Fig. 2 is a functional block diagram of the AV apparatus of the first embodiment.
Fig. 3 is a diagram showing an example of UI displayed by the AV apparatus of the first embodiment.
Fig. 4 is a diagram showing a concrete configuration of the AV apparatus of the first embodiment.
Fig. 5 is a flowchart 1 showing processes in the AV apparatus of the first embodiment.
Fig. 6 is a schematic diagram showing an AV apparatus of a second embodiment.
Fig. 7 is a functional block diagram of the AV apparatus of the second embodiment.
Fig. 8 is a flowchart 1 showing processes in the AV apparatus of the second embodiment.
Fig. 9 is a schematic diagram showing an AV apparatus of a third embodiment.
Fig. 10 is a diagram showing an example of UI displayed by the AV apparatus of the third embodiment, to which an in-viewing indication is added.
Fig. 11 is a diagram showing an example of UI displayed by the AV apparatus of the third embodiment, to which a plurality of in-viewing indications are added.

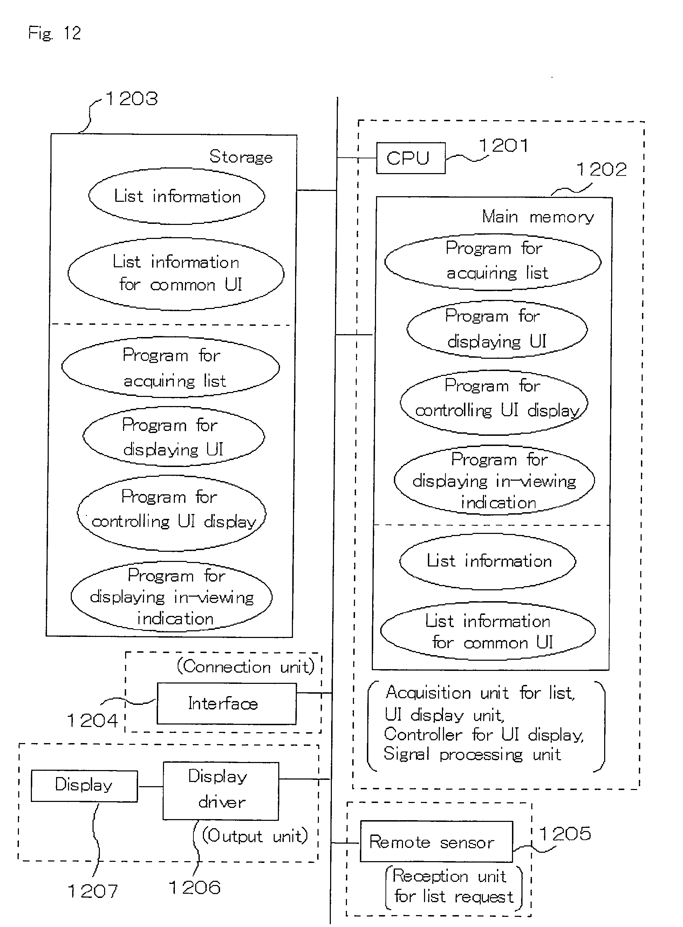

Fig. 12 is a functional block diagram of the AV apparatus of the third embodiment.
Fig. 13 is a flowchart 1 showing processes in the AV apparatus of the third embodiment.
Fig. 14 is a schematic diagram showing an AV apparatus of a fourth embodiment.
Fig. 15 is a diagram showing an example of a configuration for varying a proportion of content in a screen according to varying size of UI in the AV apparatus of the fourth embodiment.

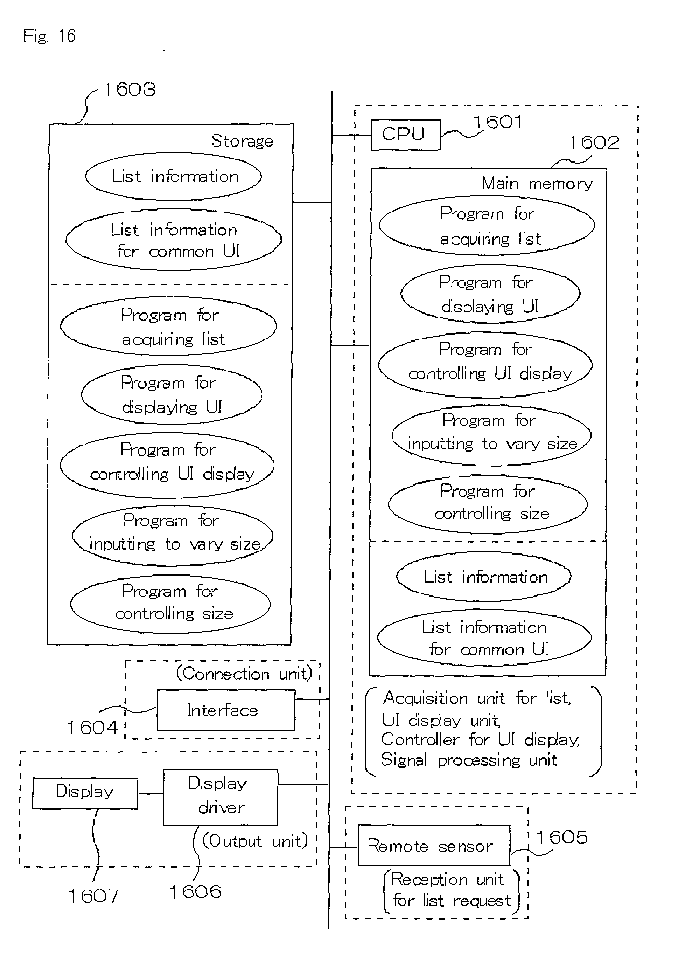

Fig. 16 is a functional block diagram of the AV apparatus of the fourth embodiment.
Fig. 17 is a flowchart 1 showing processes in the AV apparatus of the fourth embodiment.
Fig. 18 is a schematic diagram showing an AV apparatus of a fifth embodiment.

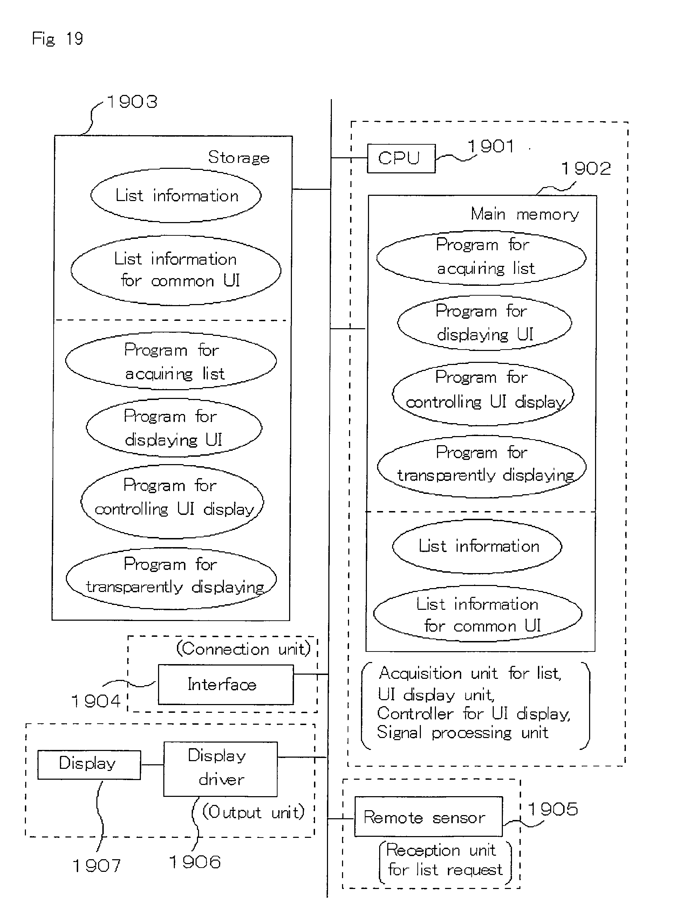

Fig. 19 is a functional block diagram of the AV apparatus of the fifth embodiment.
Fig. 20 is a flowchart showing processes in the AV apparatus of the fifth embodiment.
Fig. 21 is a diagram 1 showing a concept of a device as source for viewing.
Fig. 22 is a diagram 2 showing a concept of the device as source for viewing.
Fig. 23 is a diagram showing a frame format of data managed by the device as source for viewing.
Fig. 24 is a flowchart 2 showing processes in the AV apparatus of the first embodiment.
Fig. 25 is a sequence diagram 1 showing processes in the AV apparatus of the first embodiment.
Fig. 26 is a sequence diagram 2 showing processes in the AV apparatus of the first embodiment.
Fig. 27 is a sequence diagram 3 showing processes in the AV apparatus of the first embodiment.
Fig. 28 is a flowchart 2 showing processes in the AV apparatus of the second embodiment.
Fig. 29 is a flowchart 2 showing processes in the AV apparatus of the third embodiment.
Fig. 30 is a flowchart 2 showing processes in the AV apparatus of the fourth embodiment.
Fig. 31 is a flowchart 2 showing processes in the AV apparatus of the fifth embodiment.

### Description of Reference Numerals

- 0200: AV apparatus
- 0201: Connection unit
- 0202: Output unit
- 0203: Reception unit for list request
- 0204: Acquisition unit for list
- 0205: UI display unit
- 0206: Controller for UI display
- 0209: Signal processing unit

## Claims

1. An AV apparatus, comprising:
a connection unit, connectable with a plurality of devices as source for viewing:
a reception unit for list request, receiving a content list request from a user:
an acquisition unit for list, acquiring the list from the device as source for viewing, that is currently connected:
a UI display unit, displaying such that at least a part of the lists of the devices as source for viewing is selectable by utilizing UI shared by all devices as source for viewing
a signal processing unit, processing content signal acquired from the device as source for viewing connected with the connection unit:
an output unit, outputting the content processed by the signal processing unit and the UI; and
a controller for UI display, controlling such that the list of the device as source for viewing including the content outputted by the output unit is preferentially displayed.

2. The AV apparatus according to Claim 1,
wherein the controller for UI display comprises
means for controlling to maintain, maintaining the display of the UI without deleting the UI even if the selection of the content is done through the UI display unit.

3. The AV apparatus according to Claim1 or 2,
wherein the controller for UI display comprises
means for displaying 'in-viewing' indication, displaying an 'in-viewing' indication, an indication indicating the content selected through the UI display unit, on the list of the content corresponding to the UI.

4. The AV apparatus according to any one of Claims 1 to 3,
wherein the controller for UI display comprises
means for inputting to vary size, receiving an input to vary size of the UI to be displayed, and
means for controlling size, controlling a proportion of the UI and the content in a screen, which are outputted from the output unit, according to variation by the means for inputting variation of size.

5. The AV apparatus according to any one of Claims 1 to 4,
wherein the controller for UI display comprises
means for transparently displaying, making the UI to be displayed transparent, and superimposingly displaying the UI on a area in the screen indicated by the content outputted from the output unit.

6. A method for displaying UI, comprising the steps of:
connecting a plurality of devices as source for viewing:
receiving a content list request from a user:
acquiring the list from the device as source for viewing, the device is currently connected:
displaying such that at least a part of the lists of the devices as source for viewing is selectable by utilizing UI shared by all devices as source for viewing
processing content signal acquired from the connected device as source for viewing:
outputting the content processed by the step of processing and the UI; and
controlling such that the list of the device as source for viewing including the outputted content is preferentially displayed.
